# EUROPEAN PATENT APPLICATION

(11) **EP 3 932 213 A1**
(43) Date of publication of application: **05.01.2022**
(21) Application number: 20763036.9
(22) Date of filing: 10.02.2020
(51) Int. Cl.: A23L 27/00, A23L 27/21

(54) **ACETIC ACID-CONTAINING SEASONING LIQUID**

(30) Priority: 28.02.2019 JP 2019036185
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: ICHII, Shotaro, Handa-shi, Aichi 475-8585 (JP); MIURA, Atsuhito, Handa-shi, Aichi 475-8585 (JP)
(74) Representative: Mewburn Ellis LLP
(86) International application number: PCT/JP2020/005080
(87) International publication number: WO 2020/175124

(57) **Abstract**

To provide an acetic acid-containing seasoning liquid in which a food cooked by adding the seasoning liquid satisfies at least one of the following 1) to 4). 1) Syneresis of ingredients is reduced over a long period of time. 2) A change in color of the ingredients is suppressed over a long period of time. 3) The acidic taste or acid odor due to the acetic acid, and "choke" are suppressed, and the acidic taste is mild. 4) Even after long-term storage, flavor, texture, and appearance are not impaired, and flavor, texture, appearance of freshly-made food are maintained. An acetic acid-containing seasoning liquid includes acetic acid; at least one free amino acid selected from nine kinds of free amino acid groups consisting of valine, methionine, isoleucine, leucine, tyrosine, phenylalanine, histidine, lysine, and arginine; and a free amino acid other than the free amino acid groups. The acetic acid is contained in an amount of 0.1 % by mass or more, a total content mass ratio of the nine kinds of free amino acid groups to total free amino acids is in a range of 0.20 to 0.70, and a content mass ratio of the total free amino acids to the acetic acid is in a range of 0.01 to 0.30.

## Description

### TECHNICAL FIELD

The present disclosure relates to a seasoning liquid that contains predetermined amounts of acetic acid and a specific free amino acid (hereinafter, referred to as "acetic acid-containing seasoning liquid"), suppresses syneresis (indicating that the moisture comes out) from ingredients or a change in color of the ingredients in food during long-term storage, and has storage stability and a sustaining effect of flavor, texture, appearance of freshly-made food.

### BACKGROUND ART

Recently, along with a change in a social structure such as the declining birthrate and the aging population or population decline and diversity of lifestyle of consumers, use of meals in the form "home-meal replacement" that people purchase precooked or ready-to-cook foods such as side dishes or *bento* (boxed lunch) sold at a grocery store or a convenience store and eat them at home has been increasing, and the home-meal replacement market has been further expanding. Along with expanding of this home-meal replacement market, in foods for "home-meal replacement" that are precooked foods such as side dishes or bento, from the viewpoint of reducing food loss as well as the viewpoint of deliciousness and safety, there is a demand for long-life precooked foods in which deliciousness close to that of freshly-made foods is maintained for a long period of time and corruption or deterioration of foods due to the proliferation of microorganisms such as food poisoning bacteria is suppressed.

As for the foods for "home-meal replacement", it usually takes several hours or longer to consume the foods by consumers after production in many cases. Also, the food is mostly stored at ordinary temperature (15 to 20°C). For this reason, to suppress the corruption or deterioration of foods due to the proliferation of microorganisms such as food poisoning bacteria and enhancing storage stability, acetic acid or other organic acids that are considered to have an effect of suppressing the proliferation of microorganisms are added as an acidulant or a pH adjuster in many cases.

However, particularly, since acetic acid has a strong acidic taste or acid odor so that the flavor (taste or flavor) balance of the food becomes unbalanced or "choke (trachea is stimulated to have a cough)" is induced when eating. This causes a problem that the acetic acid cannot be added in a sufficient amount for suppressing the corruption or deterioration of foods for a long period of time and enhancing storage stability. Further, in a precooked food containing acetic acid such as thinly sliced and dried *(daikon)* radish (referred to as sliced-dried radish or *kiriboshi daikon*) or a *hijiki* seaweed simmered food, syneresis from ingredients or a change in color of the ingredients (vivid color of ingredient immediately after freshly made being lost, color development being dull as a whole, and color becoming deep) proceeds according to elapse of time from production or processing to eating. This causes a problem that flavor (state where inherent taste is sensed and flavor balance of whole food is well-regulated), texture, or appearance of freshly-made food is decreased or deteriorated. Moreover, since a variation in concentration of acetic acid or other components of the whole food occurs due to the "syneresis" from the ingredients, in parts where the concentration of the acetic acid or other components is decreased, the proliferation of microorganisms such as food poisoning bacteria is not suppressed. This causes a problem that the storage stability of the food is also decreased. The syneresis from the ingredients is a phenomenon that is more significantly observed in storage at ordinary temperature (15 to 20°C) or in a chilled condition (10°C or lower). Furthermore, the precooked food is usually eaten by re-heating immediately before eating. Re-heating may advance syneresis from ingredients or a change in color of the ingredients further proceeds by re-heating. This causes problems that the flavor, texture, and appearance of freshly-made food cannot be sensed anymore after re-heating, and the deterioration in flavor, texture, and appearance becomes more remarkable.

Various proposals have been made to improve the flavor, texture, and storage stability of precooked foods containing acetic acid. For example, Patent Literature 1 discloses a technique of enhancing storage stability without changing the taste sense and texture of a precooked food by adding powdery vinegar composition mixed with powdered vinegar and baked calcium powder to the precooked food.

According to this technique, it is regarded that the occurrence of microorganisms during storage may be suppressed without changing the flavor and texture of the precooked food. However, syneresis from food materials during storage or a change in color of the food materials cannot be suppressed. Accordingly, both safety and deliciousness with a decrease or deterioration in flavor, texture, and appearance of the precooked food like freshly-made food being sufficiently suppressing cannot be achieved after storage. In addition, the acetic acid odor derived from the powdered vinegar when the precooked food is eaten cannot be sufficiently suppressed and, accordingly, the acetic acid cannot be added in a sufficient amount for suppressing the proliferation of microorganisms, which makes the flavor and the storage stability unsatisfactory. Further, it is necessary to separately prepare a powdery composition mixed with powdered vinegar and baked calcium powder. This causes a problem that the production process becomes cumbersome.

Also, Patent Literature 2 discloses a technique for enhancing the storage stability of a cold air-dried radish (*daikon* radish) and improving the texture thereof by washing the cold air-dried radish with vinegar, then dehydrating the radish, and marinating the radish in a seasoning liquid, for example.

According to this technique, the storage stability of the food may be enhanced but the acetic acid odor derived from the vinegar is strongly sensed. Accordingly, the flavor is not preferable, syneresis from the ingredients during storage or a change in color of the ingredients cannot be sufficiently suppressed, and flavor, texture, and appearance of freshly-made food are not sensed after long-term storage.

### CITATION LIST

### Patent Literature

Patent Literature 1: JP 2002-119241A
Patent Literature 2: JPH08-280350A

### SUMMARY

### Technical Problem

An object of the present disclosure is to provide an acetic acid-containing seasoning liquid which is a seasoning liquid containing predetermined amounts of acetic acid and specific amino acid and in which a food cooked by adding this seasoning liquid satisfies at least one, preferably two or more of the following (A) to (D). (A) Syneresis of ingredients in the food is reduced over a long period of time. (B) A change in color of the ingredients in a food is suppressed and vivid color is maintained over a long period of time. (C) The acidic taste or acid odor due to the acetic acid, and "choke" are suppressed, and the acidic taste is mild. (D) Even after the long-term storage, flavor, texture, and appearance of freshly-made food are not impaired, and the flavor, texture, and appearance are maintained.

### Solution to Problem

The present inventors have conducted intensive studies in view of the aforementioned problems, and as a result, have found to obtain an acetic acid-containing seasoning liquid with which a food cooked by adding this seasoning liquid satisfies at least one, preferably two or more of the above (A) to (D) by adjusting the content of acetic acid contained in the seasoning liquid, the content mass ratio of specific free amino acids (valine, methionine, isoleucine, leucine, tyrosine, phenylalanine, histidine, lysine, and arginine) to total free amino acids, and the content mass ratio of the total free amino acids to the acetic acid in the seasoning liquid containing acetic acid. Thereby, the present inventors have completed the present disclosure based on the above findings.

That is, the present disclosure relates to an acetic acid-containing seasoning liquid. The acetic acid-containing seasoning liquid contains acetic acid; at least one free amino acid selected from nine kinds of free amino acid groups consisting of valine, methionine, isoleucine, leucine, tyrosine, phenylalanine, histidine, lysine, and arginine; and a free amino acid other than the nine kinds of free amino acid groups. The acetic acid is contained in an amount of 0.1 % by mass or more, a total content mass ratio of the nine kinds of free amino acid groups to total free amino acids is in a range of 0.20 to 0.70, and a content mass ratio of the total free amino acids to the acetic acid is in a range of 0.01 to 0.30. In addition, the present disclosure relates to an ingredient-containing precooked food. The ingredient-containing precooked food contains the acetic acid-containing seasoning liquid such that a content of acetic acid with respect to a total amount of food ingredient and other raw materials or a total amount of cooked and/or processed food is in a range of 0.02 % to 1.0 % by mass. The food ingredient is in a raw state, or in a case of making preparations, in a raw state before the preparations or a state of being made the preparations. Further, the present disclosure relates to a method for producing an ingredient-containing precooked food, the method including, in producing of the ingredient-containing precooked food, adding the acetic acid-containing seasoning liquid to a food ingredient and other raw materials or to a cooked and/or processed food such that a content of the acetic acid with respect to the food ingredient and the other raw materials or the cooked and/or processed food is in a range of 0.02 % to 1.0 % by mass, wherein the food ingredient is in a raw state, or in a case of making preparations, in a raw state before the preparations or a state of being made the preparations; and cooking the food as necessary. Moreover, the present disclosure relates to an ingredient-containing precooked food being produced by the above-described method for producing an ingredient-containing precooked food wherein syneresis from the ingredients and/or a change in color of the ingredients is suppressed even after long-term storage. In addition, the present disclosure relates to a method for producing an acetic acid-containing seasoning liquid, the method including, in producing of the acetic acid-containing seasoning liquid, mixing acetic acid, at least one free amino acid selected from nine kinds of free amino acid groups consisting of valine, methionine, isoleucine, leucine, tyrosine, phenylalanine, histidine, lysine, and arginine, a free amino acid other than the nine kinds of free amino acid groups, and other seasoning raw materials such that a content of the acetic acid is 0.1 % by mass or more, a total content mass ratio of the nine kinds of free amino acid groups to total free amino acids is in a range of 0.20 to 0.70, and a content mass ratio of the total free amino acids to the acetic acid is in a range of 0.01 to 0.30 to obtain a homogeneous liquid, and filling the obtained liquid in a container. Furthermore, the present disclosure relates to a method for suppressing syneresis from ingredients and/or a change in color of the ingredients during long-term storage of an ingredient-containing precooked food, the method including, in suppressing of syneresis from the ingredients and/or a change in color of the ingredients during long-term storage of the ingredient-containing precooked food, adding the acetic acid-containing seasoning liquid to a food ingredient and other raw materials or to a cooked and/or processed food such that a content of the acetic acid with respect to the food ingredient and the other raw materials or the cooked and/or processed food is in a range of 0.02 % to 1.0 % by mass. The food ingredient is in a raw state, or in a case of making preparations, in a raw state before the preparations or a state of being made the preparations.

### Advantageous Effects

The present disclosure provides the acetic acid-containing seasoning liquid with which the precooked food satisfying at least one, preferably two or more of the following (A) to (D) can be produced or processed. (A) Syneresis of the ingredients in the food is reduced over a long period of time. (B) A change in color of the ingredients in the food is suppressed and vivid color is maintained over a long period of time. (C) The acidic taste or acid odor due to the acetic acid, and "choke" are suppressed, and the acidic taste is mild. (D) Even after long-term storage, the flavor, texture, and appearance are not impaired, and the flavor, texture, and appearance of freshly-made food are maintained. Note that the term "long period of time" indicates a state in which about 6 to 48 hours have passed from a time immediately after the production of the precooked food, which is designated as 0 hours.

### DESCRIPTION OF EMBODIMENTS

Hereinafter, the present disclosure will be described according to specific embodiments. However, the present disclosure is not limited to the following embodiments (first embodiment to fifth embodiment) and can be carried out in any form in a range that does not deviate from the scope of the present disclosure.

(First Embodiment; Acetic Acid-Containing Seasoning Liquid) A first embodiment is an acetic acid-containing seasoning liquid containing a predetermined amount range of acetic acid, a predetermined amount range of at least one or more selected from specific free amino acids (valine, methionine, isoleucine, leucine, tyrosine, phenylalanine, histidine, lysine, and arginine; hereinafter, referred to as nine kinds of free amino acids) with respect to total free amino acids, and a predetermined amount range of the total free amino acids with respect to the acetic acid.

That is, a first embodiment is an acetic acid-containing seasoning liquid containing acetic acid; at least one free amino acid selected from nine kinds of free amino acid groups consisting of valine, methionine, isoleucine, leucine, tyrosine, phenylalanine, histidine, lysine, and arginine; and a free amino acid other than the above free amino acid groups, wherein the acetic acid is contained in an amount of 0.1 % by mass or more, a total content mass ratio of the nine kinds of the free amino acid groups to the total free amino acids is in a range of 0.20 to 0.70, and a content mass ratio of the total free amino acids to the acetic acid is in a range of 0.01 to 0.30.

The term "acetic acid-containing seasoning liquid" in the present embodiment indicates a seasoning liquid containing acetic acid, at least one of the nine kinds of free amino acids, and a free amino acid other than the above free amino acid groups, wherein a content mass ratio of the nine kinds of free amino acids to total free amino acids and a content mass ratio of the total free amino acids to the acetic acid are in predetermined ranges. Note that a seasoning liquid as a target refers to a seasoning that has flowability and is added to a raw food ingredient such as vegetables, meats, fish before cooking, a half-cooked or processed food ingredient, or a cooked or processed food to be used. That is, the seasoning liquid described herein refers to a liquid seasoning that is added to a food ingredient in a raw state or, in the case of making preparations, in a raw state before preparations or a state of being made the preparations, and to other raw materials.

The "acetic acid-containing seasoning liquid" in the first embodiment may contain a raw material for seasoning as described below and ingredients in addition to the acetic acid, the free amino acid, and any one or more of the nine kinds of free amino acids. The "acetic acid-containing seasoning liquid" in the first embodiment is usually used in a state of having flowability and further in the form of a seasoning liquid having flowability when being added to various food raw materials or in consideration of convenience thereafter but is not limited thereto.

Acetic Acid. The acetic acid-containing seasoning liquid of the first embodiment contains acetic acid. The acetic acid is mainly derived from vinegar but may be derived from other components. In the acetic acid-containing seasoning liquid of the first embodiment, the acetic acid refers to an acetic acid molecule (CH₃COOH) and an acetic acid ion (CH₃COO-). The content of the acetic acid refers to the total concentration thereof. Note that the content of the acetic acid can be measured using high-performance liquid chromatography or the like.

Content of Acetic Acid. The content of the acetic acid in the acetic acid-containing seasoning liquid of the first embodiment (hereinafter, simply referred to as "seasoning liquid" in some cases) is not particularly limited, and from the viewpoint of suppressing corruption or deterioration due to the proliferation of microorganisms in the seasoning liquid itself, the content of the acetic acid in the seasoning liquid is usually 0.1 % by mass or more, and particularly, is preferably 0.3 % by mass or more, further preferably 0.5 % by mass or more, and further more preferably 1.0 % by mass or more. When the content of the acetic acid is less than the above range, the proliferation of microorganisms in the seasoning liquid itself is not suppressed, and the storage stability may not be excellent. On the other hand, from the viewpoint of easily performing adjustment with acetic acid derived from brewed vinegar obtained by general acetic acid fermentation and production, the content of the acetic acid in the seasoning liquid is usually 20.0 % by mass or less, and particularly, is preferably 15.0 % by mass or less, and more preferably 13.0 % by mass or less. When the content of the acetic acid exceeds the above range, it may be difficult to perform adjustment and production of the acetic acid concentration of the seasoning liquid with the acetic acid derived from the brewed vinegar.

Content Mass Ratio of Nine Kinds of Free Amino Acids to Total Free Amino Acids. The acetic acid-containing seasoning liquid of the first embodiment contains a free amino acid. Examples of the "free amino acid" in the first embodiment include an L-form, a D-form, and a DL-form, and the free amino acid may be any of these. The free amino acid is different from an amino acid constituting a protein and is an amino acid existing singly in a free state in drinking and eating food. The "free amino acid" in the first embodiment refers to an amino acid existing singly in a "free" state in the seasoning liquid described above. The "total free amino acids" refer to twenty kinds of free amino acids existing in a free state in drinking and eating food separately from the amino acid constituting protein and specifically indicate alanine, asparagine, cystine, glutamine, glycine, isoleucine, leucine, methionine, phenylalanine, proline, serine, threonine, tryptophan, tyrosine, valine, aspartic acid, glutamic acid, arginine, histidine, and lysine. Furthermore, the "nine kinds of free amino acids" indicate valine, methionine, isoleucine, leucine, tyrosine, phenylalanine, histidine, lysine, and arginine among the above twenty kinds of free amino acids.

In the acetic acid-containing seasoning liquid of the first embodiment, the content mass ratio of the nine kinds of free amino acids to the total free amino acids contained in the seasoning liquid is preferably set within a predetermined range from the viewpoint of suppressing syneresis from the ingredients in a precooked or ready-to-cook food during storage for a long period of time, suppressing a change in color of the ingredients, maintaining vivid color for a long period of time, suppressing the acidic taste/acid odor and "choke" at the time of eating, and making the acidic taste mild (sensing proper acidic taste). Note that the "content mass ratio of the nine kinds of free amino acids to the total free amino acids" refers to a value obtained by dividing the total content mass of the nine kinds of free amino acids contained in the acetic acid-containing seasoning liquid of the first embodiment by the total content mass of the twenty kinds of the total free amino acids. Here, the total free amino acids are as described above and are total free amino acids adding up the twenty kinds of free amino acids existing in a free state in the seasoning liquid. Specifically, the total content mass ratio of the nine kinds of free amino acids to the total free amino acids contained in the seasoning liquid is not particularly limited and is usually 0.20 or more, and particularly, is preferably 0.27 or more, and further preferably 0.38 or more, and is usually 0.70 or less, and particularly, is preferably 0.67 or less, and further preferably 0.60 or less. Therefore, the content mass ratio of the nine kinds of free amino acids to the total free amino acids contained in the acetic acid-containing seasoning liquid of the first embodiment is usually in a range of 0.20 or more to 0.70 or less, and particularly, is preferably in a range of 0.27 or more to 0.67 or less, and more preferably in a range of 0.38 or more to 0.60 or less. When the total content mass ratio of the nine kinds of free amino acids to the total free amino acids contained in the seasoning liquid is less than the above ranges, syneresis from the ingredients of the precooked food during storage or a change in color of the ingredients are not suppressed, and favorable flavor, texture, and appearance of the precooked food may be lost. Furthermore, when the total content mass ratio exceeds the above ranges, syneresis from the ingredients of the precooked food during storage or a change in color of the ingredients are not suppressed, and favorable flavor, texture, and appearance of the precooked food may be lost. In the acetic acid-containing seasoning liquid of the first embodiment, various free amino acids may be added such that the content mass ratio of the twenty kinds of total free amino acids and the nine kinds of free amino acids falls within predetermined ranges, or the content mass ratio may be adjusted so as to fall within a predetermined range by various free amino acids contained in other raw materials mixed in the seasoning liquid. Note that the contents of the total free amino acids and the nine kinds of free amino acids may be measured using an amino acid automatic analyzer.

Content Ratio of Lysine, Arginine, and Histidine to Nine Kinds of Amino Acids. The acetic acid-containing seasoning liquid of the first embodiment contains one or more of the nine kinds of free amino acids, but it is suggested that three kinds of free amino acids among the nine kinds, specifically, a basic amino acid selected from lysine, arginine, and histidine has high effect particularly in suppressing of syneresis of ingredients in food during storage after cooking or maintaining of vivid color of the ingredients. Furthermore, to exert a higher effect, the content ratio of lysine, arginine, and histidine to the nine kinds of free amino acids is preferably set within a predetermined range. Specifically, the total content ratio of lysine, arginine, and histidine to the nine kinds of free amino acids contained in the seasoning is not particularly limited, and is usually 11 % by mass or more, preferably 17 % by mass or more, and more preferably 20 % by mass or more.

Furthermore, by adjusting the content ratio of each of lysine, arginine, and histidine within a predetermined range, a syneresis suppression effect of ingredients in food during storage can be further enhanced. Specifically, in the content mass ratio of these three kinds of free amino acids contained in the acetic acid-containing seasoning liquid of the first embodiment, the content mass ratio of the arginine to the lysine is in a range of 0.10 to 3.0 and the content mass ratio of the histidine to the lysine is in a range of 0.05 to 1.0. In the acetic acid-containing seasoning liquid of the first embodiment, various free amino acids may be added such that the content mass ratio of the nine kinds of free amino acids and the three kinds of free amino acids (lysine, arginine, and histidine) falls within the above-predetermined ranges, or the content mass ratio may be adjusted so as to fall within the predetermined ranges by various free amino acids contained in other raw materials mixed in the seasoning liquid. Note that the contents of the total free amino acids and the nine kinds of free amino acids may be measured using an amino acid automatic analyzer.

Content Mass Ratio of Total Free Amino Acids to Acetic Acid. The acetic acid-containing seasoning liquid of the first embodiment contains the acetic acid and the free amino acid as described above. In the acetic acid-containing seasoning liquid of the first embodiment, the content mass ratio of the total free amino acids to the acetic acid contained in the seasoning liquid is preferably set within a predetermined range from the viewpoint of suppressing syneresis from the ingredients during storage in the precooked food after cooking for a long period of time, suppressing a change in color of the ingredients, maintaining vivid color for a long period of time with favorable color development, suppressing the acidic taste/acid odor and "choke" at the time of eating, and making the acidic taste mild (sensing proper acidic taste). Note that the "content mass ratio of the total free amino acids to the acetic acid" refers to a value obtained by dividing the total content mass of the total free amino acids contained in the acetic acid-containing seasoning liquid of the first embodiment by the content mass of the acetic acid. Specifically, the total content mass ratio of the total free amino acids to the acetic acid contained in the seasoning liquid is not particularly limited but is usually 0.01 or more, and particularly, is preferably 0.02 or more, and further preferably 0.04 or more, and is usually 0.30 or less, and particularly, is preferably 0.29 or less, and further preferably 0.26 or less. Therefore, the content mass ratio of the total free amino acids to the acetic acid contained in the seasoning liquid is usually in a range of 0.01 or more to 0.30 or less, and particularly, is in a range of 0.02 or more to 0.29 or less, and further in a range of 0.04 or more to 0.26 or less.

Here, it is known that moisture is contained in almost all food ingredients such as vegetables, fruits, meats, or fish, and "syneresis" that the moisture retained by the food ingredients oozes out to the outside of the ingredients occurs due to an osmotic pressure difference by addition of other components such as a seasoning or physical disruption of cells by heat or impact. As described above, when "syneresis" from ingredients occurs, the inherent taste and texture of the ingredient in the precooked food are decreased, and the flavor balance and appearance of the whole food may be decreased or deteriorated. Furthermore, since a variation in concentration of the acetic acid or other components of the whole food occurs due to the "syneresis" from ingredients, in parts where the concentration of the acetic acid or other components is decreased, the proliferation of microorganisms such as food poisoning bacteria is not suppressed, and thus the storage stability of the food is decreased, the inherent taste and texture of the ingredient are decreased, and the flavor balance and appearance of the whole food may be decreased or deteriorated. When the acetic acid is added to a food, an osmotic pressure difference is generated to cause syneresis from the ingredients. Although the mechanism is not clarified, it is considered that the content mass ratio of the total free amino acids to the acetic acid and the content mass ratio of the nine kinds of free amino acids to the total free amino acids have any influences on the above-described osmotic pressure difference. Accordingly, it is considered that by setting the content ratio of the total free amino acids to the acetic acid and the mass ratio of the nine kinds of free amino acids to the total free amino acids within the above-predetermined ranges, syneresis from the ingredients is effectively suppressed. When the content mass ratio of the total free amino acids to the acetic acid is less than the above range or exceeds the above range, syneresis from the ingredients in the precooked food is not sufficiently suppressed, and accordingly, a change in color of the ingredients is also not suppressed, favorable flavor, texture, and appearance of the precooked food may be lost.

pH. The pH of the acetic acid-containing seasoning liquid of the first embodiment may be an acid level (less than pH 7) and is not particularly limited. The pH may be usually decided from the viewpoint of a balance between flavor and taste. However, although not particularly limited, the pH is usually 2.0 or more, and particularly, is preferably 2.2 or more, and further preferably 2.4 or more, and is usually 4.6 or less, and particularly, is preferably 4.5 or less, and further preferably 4.4 or less. Therefore, the pH of the acetic acid-containing seasoning liquid of the first embodiment is usually in a range of 2.0 or more to 4.6 or less, and particularly, is preferably in a range of 2.2 or more to 4.5 or less, and more preferably in a range of 2.4 or more to 4.4 or less. The organic acid typified by the acetic acid is dissociated to generate protons (hydrogen ions), but it is known that the concentration of the proton is greatly different depending on pH. The effect of suppressing the proliferation of microorganisms by acetic acid is increased as the pH is lower. This is because the dissociation degree of acetic acid changes depending on pH. When the pH is lowered to increase the concentration of proton, the dissociation is suppressed and the proportion of undissociated molecules is increased. Since the undissociated molecules have higher cell permeability than dissociated molecules, as the pH is lower, the proliferation of microorganisms is suppressed. Therefore, the concentration of acetic acid is not important but the pH is important to enhance the storage stability of the food including the seasoning. In the case of mixing a raw material increasing pH in the food, it is necessary to adjust the pH as the food by various food raw materials or food additives.

Here, the isoelectric point of the amino acid varies depending on the type of amino acid. The isoelectric point of most neutral amino acids is 5 or 6 in many cases, but the isoelectric point exists at the acidic side in the case of acidic amino acid and at the basic side in the case of basic amino acid. In the basic amino acid, there are lysine, arginine, histidine, and tryptophan. Since adding these basic amino acids to food increases the pH, the proliferation of microorganisms is likely to occur and the storage stability is decreased. For this reason, generally, these basic amino acids are not selectively added to food. However, by adding any one or more selected from lysine, arginine, and histidine so that the content ratio of lysine, arginine, and histidine to the nine kinds of amino acids and the content ratio of each of lysine, arginine, and histidine are within the above-predetermined ranges, syneresis from ingredients in food during storage can be more effectively suppressed. Since a variation in concentration of the acetic acid or other components of the whole food is less likely to occur by effectively suppressing syneresis from the ingredients, the proliferation of microorganisms from parts where the concentrations of these components are decreased is suppressed and the corruption or deterioration of the food is less likely to proceed. As a result, it has been found that the storage stability of the food can be enhanced, and the flavor, texture, and appearance of freshly-made food can be maintained in precooked food after long-term storage. Particularly, it has been found that the deterioration in flavor is less likely to occur when the above-described three kinds of free amino acids are added.

As described above, it is considered that the content mass ratio of the total free amino acids to the acetic acid and the content mass ratio of the nine kinds of free amino acids to the total free amino acids have any influences on the osmotic pressure difference, and it is considered that, among the nine kinds of free amino acids, particularly, the content mass ratio of three kinds of free amino acids of lysine, arginine, and histidine to the total free amino acids and the content ratio of these three kinds of free amino acids have a large influence on the osmotic pressure difference.

Content of Total Free Amino Acids. The content of the total free amino acids with respect to the acetic acid-containing seasoning liquid of the first embodiment is not limited, and the content of the total free amino acids with respect to the acetic acid-containing seasoning liquid of the first embodiment is usually 0.03 % by mass or more, and particularly, is preferably 0.05 % by mass or more, and further preferably 0.10 % by mass or more, and is usually 1.50 % by mass or less, and particularly, is preferably 1.0 % by mass or less, and further preferably 0.90 % by mass or less. Therefore, the content of the total free amino acids with respect to the acetic acid-containing seasoning liquid of the first embodiment is usually in a range of 0.03 % by mass or more to 1.50 % by mass or less, and particularly, is preferably in a range of 0.05 % by mass or more to 1.0 % by mass or less, and more preferably in a range of 0.10 % by mass or more to 0.90 % by mass or less. When this content is less than the above ranges, syneresis from the ingredients during storage of the precooked food added with the acetic acid-containing seasoning liquid of the first embodiment and then cooked, and a change in color of ingredients may not be suppressed well.

Content of Nine Kinds of Free Amino Acids. The content of the nine kinds of free amino acids with respect to the acetic acid-containing seasoning liquid of the first embodiment is not limited, and the content of the nine kinds of free amino acids with respect to the acetic acid-containing seasoning liquid of the first embodiment is usually 0.02 % by mass or more, and particularly, is preferably 0.025 % by mass or more, and further preferably 0.03 % by mass or more, and is usually 0.80 % by mass or less, and particularly, is preferably 0.70 % by mass or less, and further preferably 0.60 % by mass or less. Therefore, the content of the nine kinds of free amino acids with respect to the acetic acid-containing seasoning liquid of the first embodiment is usually in a range of 0.02 % by mass or more to 0.80 % by mass or less, and particularly, is preferably in a range of 0.025 % by mass or more to 0.70 % by mass or less, and more preferably in a range of 0.03 % by mass or more to 0.60 % by mass or less. When the content is less than the above ranges, syneresis from the ingredients during storage of the precooked food added with the acetic acid-containing seasoning liquid of the first embodiment and then cooked, and the deterioration in the color of the ingredients may not be suppressed well. On the other hand, when the content exceeds the above ranges, bitterness peculiar to the nine kinds of amino acids is strongly sensed, the flavor as the acetic acid-containing seasoning liquid is not preferred, and the flavor balance of the food after being cooked by adding the acetic acid-containing seasoning liquid to the food material may also become unbalanced.

Maltotriose. The acetic acid-containing seasoning liquid of the first embodiment contains maltotriose that is trisaccharide. The maltotriose is a trisaccharide in which three glucose molecules are bound by α1-4 glycosidic bond, and the glycosidic bond may be formed with any hydroxyl group of monosaccharides. Note that the content of the maltotriose can be measured using high-performance liquid chromatography or the like. These kinds of maltotriose may be added as a single raw material such that the content mass ratio of the maltotriose to the acetic acid described below is within a predetermined range, or may be adjusted such that the content mass ratio is within a predetermined range by maltotriose contained in a degradant produced by decomposing starch such as wheat or rice using enzyme or other raw materials to be mixed in the seasoning.

Content Mass Ratio of Maltotriose to Acetic Acid. In the acetic acid-containing seasoning liquid of the first embodiment, the content mass ratio of the maltotriose to the acetic acid contained in the seasoning is preferably set within a predetermined range from the viewpoint of suppressing syneresis from the ingredients in the food during storage after cooking for a long period of time, maintaining the vivid color of the ingredients for a long period of time, further reducing "choke" caused by the acidic taste or acid odor due to the acetic acid, and making the acidic taste mild. Note that the "content mass ratio of the maltotriose to the acetic acid" refers to a value obtained by dividing the content mass of the maltotriose contained in the acetic acid-containing seasoning liquid of the first embodiment by the content mass of the acetic acid. Specifically, the content mass ratio of the maltotriose to the acetic acid contained in the acetic acid-containing seasoning liquid of the first embodiment is not particularly limited but is usually 0.01 or more, and particularly, is preferably 0.05 or more, and further preferably 0.10 or more, and is usually 5.0 or less, and particularly, is preferably 4.0 or less, and further preferably 3.5 or less. Therefore, the content mass ratio of the maltotriose to the acetic acid contained in the acetic acid-containing seasoning liquid of the first embodiment is usually in a range of 0.01 or more to 5.0 or less, and particularly, is preferably in a range of 0.05 or more to 4.0 or less, and more preferably in a range of 0.10 or more to 3.5 or less. When the content mass ratio of the maltotriose to the acetic acid contained in the seasoning liquid is less than the above ranges, "choke" caused by the acidic taste or acid odor due to the acetic acid of the precooked food may not be reduced well. On the other hand, when the content mass ratio exceeds the above ranges, the mildness of the acidic taste as the precooked food may be impaired. Note that in the acetic acid-containing seasoning liquid of the first embodiment, even when maltotriose is not contained, syneresis from the ingredients in the food during storage after cooking can be suppressed for a long period of time and vivid color of the ingredients can be maintained for a long period of time by adjusting the content mass ratio of the total amino acids to the acetic acid and the content mass ratio of the nine kinds of amino acids to the total amino acids within predetermined ranges as mentioned above. However, containing maltotriose and adjusting the content mass ratio of the maltotriose to the acetic acid within the above-predetermined ranges can reduce "choke" caused by the acidic taste or acid odor due to the acetic acid and can make the acidic taste milder in addition to these effects.

Other Raw Materials in Acetic Acid-Containing Seasoning Liquid of First Embodiment. The acetic acid-containing seasoning liquid of the first embodiment can contain raw materials for seasoning or the like and ingredients used in the general liquid seasoning liquid in a range that does not impair the effect thereof, in addition to the above-described components. Such raw materials vary depending on aspects of the liquid seasoning liquid and are as described below. Note that the seasoning liquid obtained by containing raw materials (seasoning raw materials) for seasoning or the like or ingredients in the acetic acid-containing seasoning liquid of the first embodiment in this way can also be referred to as the "acetic acid-containing seasoning liquid". For example, generally, water, sugars (including a high-intensity sweetener), and salt are used as basic raw materials. In the acetic acid-containing seasoning liquid of the first embodiment, in addition to such basic raw materials as the liquid seasoning liquid, for example, additives such as oils and fats, a vinegar, a fruit juice, a relish, a relish extract, a flavor oil, an amino acid-based seasoning, a nucleic acid-based seasoning, an organic acid-based seasoning, a flavor raw material, an *umami* seasoning, alcoholic liquors, a taste/flavor component such as flavor, gums or a viscosity modifier other than a cold water-swellable starch, a stabilizer, a colorant, and a calcium salt can be mixed as raw materials (seasoning raw materials) for seasoning or the like. Furthermore, in the acetic acid-containing seasoning liquid of the first embodiment, in addition to these seasoning raw materials, ingredients such as vegetables (carrot, burdock, and radish or *daikon* radish), grains (such as red bean and soybean), meats, or fish may be mixed. The contents of these seasoning raw materials and the ingredients are not particularly limited and can be appropriately decided according to use application of the acetic acid-containing seasoning liquid of the first embodiment.

Examples of the above-described oils and fats include soybean oil, soy germ oil, canola oil, corn oil, sesame oil, perilla oil, linseed oil, peanut oil, safflower oil, high-oleic safflower oil, sunflower oil, cotton seed oil, grape seed oil, macadamia nut oil, hazel nut oil, pumpkin seed oil, walnut oil, camellia oil, tea oil, perilla oil, olive oil, rice bran oil, wheat germ oil, palm oil, and alga oil. These oils and fats may be used singly or two or more kinds thereof may be arbitrarily combined or used concurrently at an arbitrary ratio.

As the above-described vinegar, for example, there are a brewed vinegar produced from raw materials including grains such as rice or wheat, or fruit juice and a synthetic vinegar produced by adding a seasoning such as sugar to a diluted solution of glacial acetic acid or acetic acid or adding the brewed vinegar thereto and any kinds of vinegar can be used. Examples of the brewed vinegar include rice vinegar, grain vinegar (such as brown rice, black vinegar, *sake* lees vinegar, malt vinegar, adlay vinegar, or soybean vinegar), fruit vinegar (such as apple vinegar, grape vinegar, lemon vinegar, *kabosu* vinegar, plum vinegar, wine vinegar, or balsamic vinegar), alcoholic vinegar produced by acetic acid fermentation of ethanol as a raw material, Chinese vinegar, and sherry vinegar. Furthermore, examples of the synthetic vinegar include those produced by appropriately diluting glacial acetic acid or acetic acid with water. Note that these kinds of vinegar may be used singly or in the combination of two or more kinds thereof. Among these, in the acetic acid-containing seasoning liquid of the first embodiment, it is preferable to use, as the vinegar, brewed vinegar, or synthetic vinegar having a high content of acetic acid, a weak flavor derived from a raw material, and a high concentration of acetic acid. The content of the vinegar with respect to the acetic acid-containing seasoning liquid of the first embodiment is not limited, and the content thereof may be adjusted according to the aforementioned acetic acid concentration, the content mass ratio of total amino acids with respect to the acetic acid, and the content mass ratio of maltotriose with respect to the acetic acid.

Examples of the above-described sugars include table sugar, maltose, fructose, isomeric liquid sugar, glucose, starch syrup, dextrin, and sugar alcohols such as sorbitol, maltitol, and xylitol. These sugars may be used singly or two or more kinds thereof may be arbitrarily combined or used concurrently at an arbitrary ratio.

Examples of the above-described high-intensity sweetener include aspartame, acesulfame potassium, sucralose, neotame, licorice root extract, stevia, and an enzyme-treated product thereof. These high-intensity sweeteners may be used singly or two or more kinds thereof may be arbitrarily combined or used concurrently at an arbitrary ratio.

The above-described salt may be used as it is, and may be food that contains the salt. The food that contains the salt is not particularly limited, and examples thereof include soy sauce, *miso* (bean paste), and broth. The above-described soy sauce is not particularly limited, and examples thereof include *koikuchi* or dark soy sauce, *usukuchi* or light soy sauce, *shiro* or clear soy sauce, *tamari* or aged soy sauce, and *saishikomi* or re-brewed soy sauce. These soy sauces may be used singly or two or more kinds thereof may be used concurrently in an arbitrary combination and at an arbitrary ratio. The above-described *miso* is not particularly limited, and examples thereof include, in addition to barley *miso,* rice *miso,* bean *miso,* blended *miso,* and the like, dark-brown *miso,* light-brown *miso,* and pale brown *miso* named according to a difference in color caused by production methods. These kinds *of miso* may be used singly or two or more kinds thereof may be arbitrarily combined or used concurrently at an arbitrary ratio.

The above-described relish refers to a part (such as fruit, fruit skin, flower, bud, tree bark, cane, leaf, seed, root, or rhizome of a plant) of a plant that has a unique flavor and stimulative taste and color tone and is mixed to drinking and eating food for flavoring, odor eliminating, seasoning, coloring, or the like, and spice or herb is included in the relish. The spice refers to those in which cane, leaf, and flower are excluded as used parts of the relish, and examples thereof include pepper (black pepper, white pepper, red pepper), garlic, ginger, sesame (sesame seed), chili pepper, horseradish, mustard, poppy seed, Citrus junos, nutmeg, cinnamon, paprika, cardamom, cumin, saffron, allspice, clove, Japanese pepper or zanthoxylum fruit, orange peel, fennel, sweet root, fenugreek, dill seed, Sichuan pepper, long pepper, and olive fruit, and the like. Furthermore, the herb refers to those which use cane, leaf, and flower of the relish, and examples thereof include watercress, coriander, perilla, celery, taragon, chive, chervil, sage, thyme, laurel, Chinese chive, parsley, mustard green (leaf mustard), mioga ginger, artemisia, basil, oregano, rosemary, peppermint, savory, lemon grass, dill, *wasabi* greens, and Japanese pepper or zanthoxylum fruit greens.

The above-described relish extract may be any extracts as long as they are extracts of foods generally displayed as "relish" or "spice", and examples thereof include chili pepper extract, mustard extract, ginger extract, *wasabi* extract, pepper extract, garlic extract, onion extract, Japanese pepper or zanthoxylum fruit extract, and the like. These relish extracts may be used singly or two or more kinds thereof may be arbitrarily combined or used concurrently at an arbitrary ratio.

Examples of the flavor oil include ginger oil, garlic oil, mustard oil, onion oil, sesame oil, scallion oil, Chinese chive oil, cicely oil, perilla oil, *wasabi* oil, lemon oil, seafood oil, and livestock meat oil. These flavor oils may be used singly or two or more kinds thereof may be arbitrarily combined or used concurrently at an arbitrary ratio.

Examples of the above-described amino acid-based seasoning include sodium L-glutamate, DL-alanine, glycine, L- or DL-tryptophan, L-phenylalanine, L- or DL-methionine, L-lysine, L-aspartic acid, sodium L-aspartate, L-arginine, and the like. These amino acid-based seasonings may be used singly or two or more kinds thereof may be arbitrarily combined or used concurrently at an arbitrary ratio.

Examples of the above-described nucleic acid-based seasoning include disodium 5'-inosinate, disodium 5'-guanylate, disodium 5'-uridylate, disodium 5'-cytidylate, calcium 5'-ribonucleotide, disodium 5'-ribonucleotide, and the like. These nucleic acid-based seasonings may be used singly or two or more kinds thereof may be arbitrarily combined or used concurrently at an arbitrary ratio.

Examples of the above-described organic acid-based seasoning include calcium citrate, trisodium citrate, potassium gluconate, sodium gluconate, succinic acid, monosodium succinate, disodium succinate, sodium acetate, potassium DL-bitartrate, potassium L-bitartrate, sodium DL-tartrate, sodium L-tartrate, potassium lactate, calcium lactate, sodium lactate, monosodium fumarate, sodium DL-malate, and the like. These organic acid-based seasonings may be used singly or two or more kinds thereof may be arbitrarily combined or used concurrently at an arbitrary ratio. By using two or more kinds of organic acid-based seasonings concurrently, the tastes of these seasonings are synergetically enhanced, which is preferable.

Examples of the above-described flavor raw material include oceanic bonito or skipjack tuna broth or *dashi,* kelp broth or *dashi,* vegetable extract, skipjack tuna extract, kelp extract, seafood extract, livestock meat extract, and the like. These flavor raw materials may be used singly or two or more kinds thereof may be arbitrarily combined or used concurrently at an arbitrary ratio.

Examples of the above-described *umami* seasoning include a protein hydrolysate, a yeast extract, and the like. These *umami* seasonings may be used singly or two or more kinds thereof may be arbitrarily combined or used concurrently at an arbitrary ratio.

Examples of the above-described alcoholic liquors include refined *sake,* synthetic refined *sake, mirin* (sweet cooking rice wine), *shochu* (Japanese distilled spirit), wine, liqueur, Chinese rice wine, and the like. These alcoholic liquors may be used singly or two or more kinds thereof may be arbitrarily combined or used concurrently at an arbitrary ratio.

Examples of the above-described flavor include ginger flavor, garlic flavor, mustard flavor, onion flavor, sesame flavor, scallion flavor, Chinese chive flavor, perilla flavor, *wasabi* flavor, lemon flavor, and the like. These flavors may be used singly or two or more kinds thereof may be arbitrarily combined or used concurrently at an arbitrary ratio.

Furthermore, examples of the above-described viscosity modifier include alginic acid, sodium alginate, carrageenan, karaya gum, agar, cellulose, tamarind seed gum, pullulan, pectin, chitin, and chitosan. These viscosity modifiers may be used singly or two or more kinds thereof may be arbitrarily combined or used concurrently at an arbitrary ratio.

(Second Embodiment; Ingredient-containing Precooked Food) A second embodiment is an ingredient-containing precooked food that contains the above-described acetic acid-containing seasoning liquid of the first embodiment, wherein the acetic acid-containing seasoning liquid is contained in the ingredient-containing precooked food such that a content of acetic acid with respect to a total amount of food ingredient and other raw materials or a total amount of cooked and/or processed food is in a range of 0.02 % to 1.0 % by mass, and the food ingredient is in a raw state, or in a case of making preparations, in a raw state before the preparations or a state of being made the preparations. The above-described acetic acid-containing seasoning liquid of the first embodiment is added to a raw food ingredient before cooking, a half-cooked food ingredient, or a cooked food. This ingredient-containing precooked food is an ingredient-containing precooked food that contains the above-described acetic acid-containing seasoning liquid of the first embodiment that contains the amino acid, at least one free amino acid selected from nine kinds of amino acids, and a free amino acid other than the above free amino acids.

Addition Amount of Acetic Acid-Containing Seasoning Liquid in Ingredient-Containing Precooked Food of Second Embodiment. The acetic acid-containing seasoning liquid in the ingredient-containing precooked food of the second embodiment may be added to any of a total amount of a food ingredient and other raw materials or cooked or processed food wherein the food ingredient is in a raw state, or in a case of making preparations, in a raw state before the preparations or a state of being made the preparations. The addition amount thereof may be adjusted to be a predetermined range described below with respect to the total mass including the ingredient before cooking, other raw materials for seasoning or the like, and water, in any cases. For example, in the case of cooking thinly sliced and dried (*daikon*) radish (also referred to as sliced-dried radish or *kiriboshi daikon*), the addition amount of the acetic acid-containing seasoning liquid of the first embodiment may be decided so that the amount of the acetic acid-containing seasoning liquid with respect to the total mass of dried radish, water, and other seasonings to be added is in a predetermined range described below. Furthermore, in the case of adding the acetic acid-containing seasoning to the cooked spinach seasoned with sesame sauce, the addition amount of the acetic acid-containing seasoning liquid of the first embodiment may be decided so that the amount of the acetic acid-containing seasoning liquid with respect to the total mass of the spinach seasoned with sesame sauce is in a predetermined range described below.

The addition amount of the acetic acid-containing seasoning liquid of the first embodiment with respect to the ingredient-containing precooked food of the second embodiment is not limited. However, it is preferable to add the acetic acid-containing seasoning liquid so that the addition amount of the acetic acid-containing seasoning liquid of the first embodiment to the total amount of a food ingredient and other raw materials or the total amount of cooked and/or processed food is usually 0.2 % by mass or more, and preferably 0.5 % by mass or more, and is usually 30 % by mass or less, and preferably 20 % by mass, wherein the food ingredient is in a raw state, or in a case of making preparations, in a raw state before the preparations or a state of being made the preparations. Therefore, it is preferable to add the acetic acid-containing seasoning liquid so that the addition amount of the acetic acid-containing seasoning liquid of the first embodiment to the total amount of the food ingredient and the other raw materials or the total amount of the cooked and/or processed food is usually in a range of 0.2 % by mass or more to 30 % by mass or less, and preferably in a range of 0.5 % by mass or more to 20 % by mass or less, wherein the food ingredient is in the raw state, or in the case of making preparations, in the raw state before the preparations or the state of being made the preparations. Furthermore, from the viewpoint of flavor balance of the precooked food cooked or processed by adding the acetic acid-containing seasoning liquid of the first embodiment, it is preferable to contain the acetic acid-containing seasoning liquid so that the content of the acetic acid with respect to the total amount of the food ingredient and the other raw materials or the total amount of the cooked and/or processed food is usually 0.02 % by mass or more, and particularly, preferably 0.04 % by mass or more, and is usually 1.0 % by mass or less, and particularly preferably 0.5 % by mass or less, wherein the food ingredient is in the raw state, or in the case of making preparations, in the raw state before the preparations or the state of being made the preparations. Therefore, it is preferable to contain the acetic acid-containing seasoning liquid so that the content of the acetic acid with respect to the total amount of the food ingredient and the other raw materials or the total amount of the cooked and/or processed food is usually in a range of 0.02 % by mass or more to 1.0% by mass or less, and more preferably in a range of 0.04 % by mass or more to 0.5 % by mass or less, wherein the food ingredient is in the raw state, or in the case of making preparations, in the raw state before the preparations or the state of being made the preparations.

Note that the ingredient-containing precooked food of the second embodiment also includes an ingredient-containing precooked food which is produced by a method for producing an ingredient-containing precooked food of a third embodiment described below and in which syneresis from the ingredients and/or a change in color of the ingredients is suppressed even after long-term storage. According to the ingredient-containing precooked food of the second embodiment, the precooked food satisfying at least one, preferably two or more of the following (A) to (D) is obtained. (A) Syneresis of the ingredients in the food is reduced over a long period of time. (B) A change in color of the ingredients in the food is suppressed and vivid color is maintained over a long period of time. (C) The acidic taste or acid odor due to acetic acid, and "choke" at the time of eating are suppressed, and the acidic taste is mild. (D) Even after long-term storage, flavor, texture, and appearance are not impaired, and the flavor, texture, and appearance of freshly-made food are maintained. Here, the term "long-term storage" indicates a state in which about 6 to 48 hours have passed from a time immediately after production, which is designated as 0 hours.

According to the ingredient-containing precooked food of the second embodiment containing the ingredient-containing precooked food produced by the method for producing an ingredient-containing precooked food of the third embodiment, a technique capable of satisfying at least one, preferably two or more of the following (A) to (D) is provided.

(Third Embodiment; Method for Producing Ingredient-Containing Precooked Food) A third embodiment relates to a method for producing an ingredient-containing precooked food, the method including adding the acetic acid-containing seasoning liquid of the first embodiment to a food ingredient and other raw materials or to a cooked and/or processed food so that a content of the acetic acid with respect to the food ingredient and the other raw materials or the cooked and/or processed food is in a range of 0.02 % to 1.0 % by mass, wherein the food ingredient is in a raw state, or in a case of making preparations, in a raw state before the preparations or a state of being made the preparations; and cooking the food as necessary.

According to the method for producing an ingredient-containing precooked food of the third embodiment, the precooked food satisfying at least one, preferably two or more of the following (A) to (D) is produced. (A) Syneresis of the ingredients in the food is reduced over a long period of time. (B) A change in color of the ingredients in a food is suppressed and vivid color is maintained over a long period of time. (C) The acidic taste or acid odor due to the acetic acid, and "choke" at the time of eating are suppressed, and the acidic taste is mild. (D) Even after long-term storage, flavor, texture, and appearance are not impaired, and the flavor, texture, and appearance of freshly-made food are maintained.

Here, the acetic acid-containing seasoning liquid of the first embodiment is as described above. Note that in the third embodiment, it is preferable to perform addition and mixing so that the addition amount of the acetic acid-containing seasoning liquid with respect to the food ingredient, which is in the raw state, or in the case of making preparations, in the raw state before the preparations or the state of being made the preparations, and the other raw materials or to the cooked or processed food and other requirements also satisfy the conditions such as preferred ranges described in the section of the above description of the second embodiment.

In the second and third embodiments, first, examples of the "food ingredient in a raw state" before cooking (hereinafter, also referred to as "raw food ingredient" in some cases) include livestock meats such as chicken meat, pork meat, beef, and sheep meat, fish such as moonfish, chub mackerel, tuna, and blackfish or salmon, shellfish such as shrimp and crab, seaweeds such as *wakame,* kelp, and *hijiki* seaweed, mushrooms such as *shiitake* mushroom, eryngii mushroom, Grifola frondosa or *maitake* mushroom, and Lyophyllum fumosum or *shimeji* mushroom, root vegetables such as radish or *daikon* radish, carrot, and burdock root, leaf vegetables such as cabbage, Chinese cabbage, Japanese mustard spinach, and spinach, cucurbitaceous vegetables such as cucumber, winter melon, and pumpkin, grains such as soybean, rice, and corn, roots such as potato, taro root, yam, and sweet potato, and sort of other broad-sense vegetables such as onion and eggplant. Those obtained by peeling, cutting, etc. these ingredients are also included in this "raw food ingredient".

Next, examples of the "a raw state before preparations or a state of being made the preparations" (hereinafter, also referred to as "half-cooked or processed food ingredient" in some cases) include those in which the above-described "raw food ingredient" is roasted, simmered, steamed, sauteed, or fried with the addition of other raw materials such as a seasoning as necessary or is fermented with microorganisms such as rice malt or yeast and which can be eaten on its own but is used in a broader sense of dishes. For example, bean curd, boiled soybeans, amorphophallus konjac (yam cake), deep-fried bean curd, boiled plain of various vegetables, sausage, pasta, and the like are included.

Furthermore, the "cooked and/or processed food" refers to a food material processed product obtained by simmering, steaming, or roasting the above-described "raw food ingredient" such as vegetables, meats, and fish or the above-described "half-cooked or processed food ingredient" with the addition of water or seasoning as necessary, and examples thereof include those which are in a stage of being eaten on its own by ordinary, such as sliced-dried radishes or *kiriboshi daikon,* simmered chicken and root vegetables or *Chikuzen-ni*, *hijiki* seaweed simmered food, grilled chicken with teriyaki sauce, steamed dishes (meats or vegetables), spinach seasoned with sesame sauce, deep-fried bean curd with soup stock, macaroni salad, potato salad, sauteed vegetables, simmered yellowtail and radish, burdock roots cooked in soy sauce and sugar, steamed egg custard, plain boiled rice, salted rice, and rice seasoned with soy sauce and boiled with other ingredients. Particularly, steamed dishes (meats or vegetables), spinach seasoned with sesame sauce, and macaroni salad are preferred. Raw materials or ingredients contained in these "cooked or processed foods" are not particularly limited, and it is preferable to add the acetic acid-containing seasoning liquid in a state where these raw materials or ingredients are contained and mixed, as necessary.

In the third embodiment, it is preferable that the above-described acetic acid-containing seasoning liquid of the first embodiment is added to the food ingredient and the other raw materials or to the cooked and/or processed food so that the content of the acetic acid with respect to the food ingredient and the other raw materials or the cooked and/or processed food is usually in a range of 0.02 % by mass or more to 1.0 % by mass or less, and particularly, in a range of 0.04 % by mass or more to 0.5 % by mass or less, as described above, wherein the food ingredient is in the raw state, or in the case of making preparations, in the raw state before the preparations or the state of being made the preparations. A preferred addition amount of the acetic acid at this time is as described in the above-described second embodiment. Note that when the above-described acetic acid-containing seasoning liquid of the first embodiment is added, other raw materials such as water and a seasoning may be added according to the flavor adjustment of the ingredient-containing precooked food. In the third embodiment, the addition amount of other raw materials with respect to the "raw food ingredient" or the "half-cooked or processed food ingredient" or the addition amount of the other raw materials with respect to the "cooked or processed food" are not particularly limited.

(Fourth Embodiment; Method for Producing Acetic Acid-Containing Seasoning liquid) A fourth embodiment relates to a method for producing an acetic acid-containing seasoning liquid, the method including, in producing of the acetic acid-containing seasoning liquid, mixing acetic acid, at least one free amino acid selected from nine kinds of free amino acid groups consisting of valine, methionine, isoleucine, leucine, tyrosine, phenylalanine, histidine, lysine, and arginine, a free amino acid other than the above free amino acid groups, and other seasoning raw materials, so that a content of the acetic acid is 0.1 % by mass or more, a total content mass ratio of the nine kinds of free amino acid groups to the total free amino acids is in a range of 0.20 to 0.70, and a content mass ratio of the total free amino acids to the acetic acid is in a range of 0.01 to 0.30, thereby obtaining a homogeneous liquid; and filling the liquid in a container.

Here, the expression "the total content mass ratio of the nine kinds of free amino acid groups to the total free amino acids is in a range of 0.20 to 0.70", the expression "the content mass ratio of the total free amino acids to the acetic acid is in a range of 0.01 to 0.30", and further, seasoning raw materials and ingredients, which are added as necessary, are as described in the first to third embodiments.

In the fourth embodiment, mixing may be stirring or shaking and may be performed while heating as necessary. The mixing and stirring of the raw materials may be performed by a conventionally known method, and the temperature in the above-described mixing and stirring step is usually preferably in a range of 10°C or higher to 30°C or lower.

After obtaining the homogeneous liquid by the above-described step, the homogeneous liquid is filled in the container as it is or is subjected to a sterilization treatment such as thermal sterilization or membrane filtration sterilization and then filled in the container, similar to a general liquid seasoning. The material or shape of the container used herein is not particularly limited, and examples of the container include a plastic container, a pouch (polyethylene pouch or aluminum pouch), a plastic or PET bottle, a steel can, an aluminum can, a bottle container, and the like. In the fourth embodiment, the acetic acid-containing seasoning liquid is filled in the container and then subjected to a sterilization treatment such as thermal sterilization or retort sterilization, and then may be used as a liquid seasoning.

The use form of the acetic acid-containing seasoning liquid obtained in the fourth embodiment is not particularly limited. For example, the acetic acid-containing seasoning liquid obtained in the fourth embodiment can be used "for a precooked food". Herein, in the "precooked food", in a case where a food ingredient is a vegetable, the precooked food can be used by adding a raw or half-cooked vegetable or adding a vegetable or meat cooked or processed, for example, roasted, simmered, sauteed, or the like. The "precooked food" refers to food obtained by simmering, steaming, or roasting food ingredients such as vegetables, meats, or fish with the addition of water or a seasoning and/or a food material processed product which is eaten on its own or eaten by re-heating. Examples of the precooked food include sliced-dried radishes or *kiriboshi daikon,* simmered chicken and root vegetables or *Chikuzen-ni,* grilled chicken with teriyaki sauce, and spinach seasoned with sesame sauce, and particularly, sliced-dried radishes, simmered chicken and root vegetable, and a *hijiki* seaweed simmered food are preferred. Raw materials or ingredients contained in these precooked foods are not particularly limited, and it is preferable to use the acetic acid-containing seasoning liquid in a state where the raw materials and/or the ingredients are contained and mixed, as necessary.

(Fifth Embodiment: Method for Suppressing Syneresis from Ingredients and/or Change in Color of Ingredients during Long-Term Storage of Ingredient-Containing Precooked Food). A fifth embodiment relates to a method for suppressing syneresis from ingredients and/or a change in color of the ingredients during long-term storage of an ingredient-containing precooked food. The method including, in suppressing syneresis from ingredients and/or a change in color of the ingredients during long-term storage of an ingredient-containing precooked food, adding the acetic acid-containing seasoning liquid of the first embodiment to a food ingredient and other raw materials, or to a cooked and/or processed food so that a content of the acetic acid with respect to the food ingredient and the other raw materials or the cooked and/or processed food is in a range of 0.02 % to 1.0 % by mass, wherein the food ingredient is in a raw state, or in a case of making preparations, in a raw state before the preparations or a state of being made the preparations.

In the fifth embodiment, respective terms used herein such as the acetic acid-containing seasoning liquid, the food ingredient, and other raw materials are as described in the first to fourth embodiments as long as they are the same terms.

In the fifth embodiment, in suppressing syneresis from the ingredients and/or a change in color of the ingredients during long-term storage of the ingredient-containing precooked food, the above-described acetic acid-containing seasoning liquid of the first embodiment is added to a food ingredient and other raw materials or to a cooked and/or processed food so that a content of the acetic acid with respect to the food ingredient and the other raw materials or the cooked and/or processed food is in a range of 0.02 % to 1.0 % by mass, wherein the food ingredient is in a raw state, or in a case of making preparations, in a raw state before the preparations or a state of being made the preparations.

In the fifth embodiment, similar to the description in the second embodiment, it is preferable to contain the acetic acid-containing seasoning liquid in a state where the content of the acetic acid to the total amount of the food ingredient and the other raw materials or to the total amount of the cooked or processed food is usually in a range of 0.02 % by mass or more to 1.0% or less, and particularly preferably in a range of 0.04 % by mass or more to 0.5 % by mass or less, wherein the food ingredient is in the raw state, or in the case of making preparations, in the raw state before the preparations or the state of being made the preparations.

According to the fifth embodiment, it is possible to suppress syneresis from the ingredients and/or a change in color of the ingredients during long-term storage of the ingredient-containing precooked food. More specifically, not only syneresis from the ingredients and/or a change in color of the ingredients during long-term storage can be suppressed, but also at least one, preferably two or more of the following (A) to (D) can be satisfied. (A) Syneresis of the ingredients in the food is reduced over a long period of time. (B) A change in color of the ingredients in the food is suppressed and vivid color is maintained over a long period of time. (C) The acidic taste or acid odor due to the acetic acid, and "choke" at the time of eating are suppressed, and the acidic taste is mild. (D) Even after long-term storage, flavor, texture, and appearance are not impaired, and flavor, texture, and appearance of freshly-made food are maintained. Here, the term "long-term storage" indicates a state in which about 6 to 48 hours have passed from a time immediately after production, which is designated as 0 hours as also described in the second embodiment.

### EXAMPLES

Hereinafter, the present disclosure will be further described in detail according to Examples. However, these Examples are merely examples shown for explanatory purpose convenience, and the present disclosure is not limited to these Examples in any meaning.

(Example 1) Investigation of total content mass ratio of above-described nine kinds of free amino acid groups to total free amino acids in acetic acid-containing seasoning liquid and content mass ratio of total free amino acids to acetic acid, (1) Preparation of test sample. Regarding various food-grade amino acid samples (17 kinds of samples including asparaginic acid, threonine, serine, glutamic acid, proline, glycine, cystine, alanine, valine, methionine, isoleucine, leucine, tyrosine, phenylalanine, histidine, lysine, and arginine) (all manufactured by Ajinomoto Co., Inc.), the combination and the mixing ratio of amino acids were changed, and the acetic acid and water were further added thereto, thereby preparing the acetic acid-containing seasoning liquids having predetermined concentrations shown in Table 1 (Table 1 - 1-1 to Table 1-3-2). As for the preparation method, with reference to the free amino acid pattern of a commercially available vegetable-protein hydrolysate (AMIFLEX AE-1: BANSYU CHOMIRYO CO., LTD.), a mother liquid of the test sample (hereinafter, referred to as the mother liquid) was prepared using the above-described 17 kinds of amino acid samples. In the preparation of various test samples, nine kinds of amino acids (valine, methionine, isoleucine, leucine, tyrosine, phenylalanine, histidine, lysine, and arginine) and three kinds of amino acids (lysine, arginine, and histidine) were added to the mother liquid to maintain the balance, thereby preparing acetic acid-containing seasoning liquids (Test Sample Nos. 1 to 18) having predetermined concentrations shown in Table 1 (Table 1-1-1 to Table 1-3-2).

(2) Evaluation procedure and evaluation result of rest sample, (2-1) Content mass ratio of nine kinds of free amino acids to total free amino acids. Regarding Test Sample Nos. 1 to 18 prepared in the above section (1), the content of each of twenty kinds of free amino acids was measured according to the amino acid analysis method of "the Standard Tables of Food Composition in Japan 2015 (Seventh Revised Version) Analytical Manual". Note that JLC-500/V2 (manufactured by JEOL Ltd.) was used as an amino acid automatic analyzer. The total amount of respective twenty kinds of amino acids was regarded as the content of the total free amino acids, and the total amount of nine kinds of valine, methionine, isoleucine, leucine, tyrosine, phenylalanine, histidine, lysine, and arginine of these twenty kinds of amino acids was regarded as the content of nine kinds of free amino acids. In addition, regarding Test Sample Nos. 1 to 18 obtained in the above (1), the content mass ratio of the nine kinds of free amino acids to the total free amino acids was obtained by dividing the content of the nine kinds of free methionine by the content of the total free amino acids. Further, similarly, the content ratio of each of three kinds of free amino acids to the nine kinds of free amino acids was obtained by dividing the content of each of the three kinds (lysine, arginine, and histidine) of free amino acids by the total content of the nine kinds of free amino acids. Moreover, in addition to each content ratio of the three kinds of free amino acids, the total content ratio of the three kinds of free amino acids to the nine kinds of free amino acids was obtained.

(2-2) Content mass ratio of total free amino acids with respect to acetic acid. Regarding Test Sample Nos. 1 to 18 prepared in the above (1), the content mass ratio of the total free amino acids to the acetic acid was obtained by dividing the content of the total free amino acids by the content of the acetic acid.

(2-3) Sensory test. Regarding Test Sample Nos. 1 to 18 and Comparative Sample Nos. 2 and 3 prepared in the above (1), a sensory test of flavor as the acetic acid-containing seasoning liquid was performed. The sensory test was performed by ten skilled panels and the evaluation was performed with three-grade intensity described below. Note that the panels having performed the sensory test are skilled panels who are usually well aware of commercially available improvers that are generally distributed and also sufficiently comprehend a general level ("normal" in the evaluation) of "flavor". Results of the sensory test are shown in Table 1 (Table 1-1-1 to Table 1-3-2).

The three grades are as follows.

| | |
|---|---|
| × | Flavor is poor, and there is a strange feeling as the seasoning liquid |
| ○ | Flavor is good, and it is preferable as the seasoning liquid |
| ⊚ | Flavor is very good, and it is particularly preferable as the seasoning liquid |

(Example 2) (1) Preparation of test sample. In the sensory evaluation of Example 1, the precooked sliced-dried radishes or *kiriboshi daikon* were prepared using test samples (Nos. 1 to 17) and comparative samples (Nos. 2 and 3) in which the flavor as the seasoning was evaluated with the signs "○" or "⊚". Two hundred grams (200 g) of sliced-dried radish was lightly washed with water and was left to be immersed in a sufficient amount of water for 30 minutes, and then was lightly squeezed to become 400 g, thereby obtaining 400 g of the sliced-dried radish rehydrated with water. Two hundred and forty grams (240 g) of water and the acetic acid-containing seasoning liquid of Example 1 (Test sample Nos. 1 to 17 and Comparative Sample Nos. 2 and 3) were added to 400 g of the sliced-dried radish at an addition rate shown in Table 1 and sufficiently stirred and mixed. This mixture was transferred to a stainless steel bowl (depth: about 6 cm, diameter: about 17 cm), covered with a lid, and then heated by a commercially available electric steam convection oven (Model No.: TT-3, manufactured by COMET KATO MFG. CO., LTD.) at 150°C for 30 minutes, thereby obtaining a precooked sliced-dried radish. Note that the addition rate of the acetic acid-containing seasoning liquid was obtained by dividing the mass of the added acetic acid-containing seasoning liquid by the total mass of the sliced-dried radish rehydrated with water and the added water. Note that the precooked sliced-dried radish cooked by the above-described procedure without the addition of acetic acid and the free amino acid was used as Comparative Sample No. 1.

(2) Evaluation procedure of test sample, (2-1) Evaluation of syneresis. Regarding the precooked sliced-dried radishes prepared in the above (1) (Test Sample Nos. 1 to 17 and Comparative Sample Nos. 2 and 3), the evaluation of syneresis of the precooked food (sliced-dried radish) during storage at ordinary temperature was performed. Note that the evaluation was performed by the following procedure. One hundred grams (100 g) of the precooked sliced-dried radishes prepared in the above (1) (Comparative Sample Nos. 1 to 3 and Test Sample Nos. 1 to 17) were divided and put in containers and stored at ordinary temperature for 6 hours, 12 hours, 24 hours, and 48 hours. Next, the containers were left for 10 minutes in an inclined state at an inclination of 45° while paying attention that the sliced-dried radishes did not slip out. Thereafter, only broth accumulating at the bottom of the container was taken out, and the weight thereof was measured to be regarded as syneresis weight. Each syneresis rate in respective storage times (6 hours, 12 hours, 24 hours, and 48 hours) of Comparative Sample Nos. 2 and 3 and Test Sample Nos. 1 to 17 was calculated from the syneresis weight obtained above using the following formula: Syneresis rate (%) = (Syneresis weight of each test sample in respective storage times/Syneresis weight of Comparative Sample No. 1 in respective storage times × 100). The evaluation was performed with five grades described below based on the syneresis rate obtained above. Furthermore, also regarding test samples heated again by a microwave oven at 500 W for 1 minute after storage at ordinary temperature for 6 hours, 12 hours, 24 hours, and 48 hours, syneresis was evaluated by the same procedure as described above.

The five grades are as follows.

| | |
|---|---|
| 5 | The syneresis rate is less than 85%, and particularly, syneresis is suppressed |
| 4 | The syneresis rate is in a range of 85% or more to less than 90%, and syneresis is suppressed |
| 3 | The syneresis rate is in a range of 90% or more to less than 95%, and syneresis is slightly suppressed |
| 2 | The syneresis rate is in a range of 95% or more to less than 98%, and syneresis is not suppressed much |
| 1 | The syneresis rate is 99% or more, and syneresis is not suppressed |

(2-2) Sensory test. Regarding the precooked sliced-dried radishes prepared in the above (1) (Comparative Sample Nos. 1 to 3 and Test Sample Nos. 1 to 17), sensory tests of "color immediately after production", "color after 6 hours", "color after 12 hours", "color after of 24 hours", "color after 48 hours", and "acidic taste/acid odor and choke immediately after production" were performed. The sensory testing was performed by ten skilled panels, and the color of comparative samples and test samples as compared with Comparative Sample No. 1 (sample immediately after production, storage: 0 hours) were evaluated with five-grade intensity described below.

The five grades are as follows.

| | |
|---|---|
| Intensity 1 | The color of the ingredient is cloudy, there is no vivid color, and the color development is very poor |
| Intensity 2 | The color of the ingredient is slightly cloudy, there is almost no vivid color, and the color development is poor |
| Intensity 3 | The color of the ingredient, the vivid color of the ingredient, and the color development are equal |
| Intensity 4 | The color of the ingredient is vivid and the color development is good |
| Intensity 5 | The color of the ingredient is very vivid and the color development is very good |

Furthermore, regarding the precooked sliced-dried radishes immediately after production (Comparative Sample Nos. 1 to 3 and Test Sample Nos. 1 to 17), acidic taste/acid odor and "choke" were evaluated with five-grade intensity described below. Note that the panels having performed the sensory test are skilled panels who are usually well aware of commercially available precooked foods that are generally distributed and also sufficiently comprehend a general level ("normal" in the evaluation) of each evaluation item.

The five grades are as follows.

| | |
|---|---|
| Intensity 1 | The acidic taste/acid odor is extremely felt, and the "choke" is extremely felt |
| Intensity 2 | The acidic taste/acid odor is strongly felt, and the "choke" is strongly felt |
| Intensity 3 | The acidic taste/acid odor is felt, and the "choke" is slightly felt |
| Intensity 4 | The acidic taste/acid odor is mild, and the "choke" is hardly felt |
| Intensity 5 | The acidic taste/acid odor is extremely mild, and the "choke" is not felt at all |

(3) Evaluation result of test sample. The acetic acid concentration of Comparative Sample Nos. 1 to 3 and Test Sample Nos. 1 to 17, the content mass ratio of the nine kinds of free amino acids to the total free amino acids, the content mass ratio of the total free amino acids to the acetic acid, the content ratio of the three kinds of free amino acids (lysine, arginine, histidine) to the nine kinds of free amino acids, the content ratio of each of the three kinds of free amino acids to the nine kinds of free amino acids, the addition amount of the acetic acid-containing seasoning liquid, and results of the syneresis evaluation and the sensory test result are shown in Table 1 (Table 1-1-1 to Table 1-3-2). Note that in (1) of Example 2, the same syneresis evaluation and sensory evaluation of the precooked sliced-dried radishes obtained by adding and mixing the addition amount of the acetic acid-containing seasoning liquid (Comparative Example Nos. 2 and 3 and Test Sample Nos. 1 to 17) in each test sample to the sliced-dried radish (Comparative Example No. 1) prepared without the addition of acetic acid and a free amino acid after storage for 0 hours were also performed, and as a result, the same results as in the test samples added before cooking were obtained.

(Example 3) Investigation of content mass ratio of maltotriose to acetic acid in acetic acid-containing seasoning liquid, (1) Preparation of test sample. Next, the combination and mixing ratio of the amino acid liquid prepared in (1) of Example 1, acetic acid, and maltotriose were changed, thereby preparing acetic acid-containing seasoning liquids (Test Sample Nos. 19 to 27) having predetermined concentrations shown in Table 2 (Table 2-1-1 to Table 2-2-2). Note that Oligo MT500 manufactured by Showa Sangyo Co., Ltd. was used as maltotriose, and the content of the maltotriose in the acetic acid-containing seasoning liquid was calculated based on the mixing amount of the maltotriose contained in that product (mixing 50 % by mass of maltotriose).

(2) Evaluation procedure of test sample, (2-1) Content mass ratio of maltotriose to acetic acid. Regarding Test Sample Nos. 19 to 27 prepared in the above (1), the content mass ratio of the maltotriose to the acetic acid was obtained by dividing the content of the maltotriose by the content of the acetic acid.

(2-2) Content mass ratio of total free amino acids with respect to acetic acid. Regarding (Test Sample Nos. 19 to 27) prepared in the above (1), similarly to (2) of Example 1, the content mass ratio of the nine kinds of free amino acids to the total free amino acids and the content mass ratio of the total free amino acids to the acetic acid were obtained.

(2-3) Evaluation of precooked food. According to (1) of Example 2, the precooked sliced-dried radishes (Test Sample Nos. 19 to 27) were obtained using Test Sample Nos. 19 to 27 prepared in the above (1). Furthermore, similar to (2) of Example 2, syneresis evaluation and sensory evaluation of the precooked sliced-dried radishes ("color immediately after production", "color after 6 hours", "color after 12 hours", "color after 24 hours", "color after 48 hours", and "acidic taste/acid odor and choke immediately after production") were performed. Further, sensory evaluation of "mildness of acidic taste" was also performed and the evaluation was performed with three-grade intensity described below.

The three grades are as follows.

| | |
|---|---|
| × | The acidic taste is not mild |
| ○ | The acidic taste is mild |
| ⊚ | The acidic taste is extremely mild |

(3) Evaluation result of test sample. The acetic acid concentration of Comparative Sample Nos. 1 to 3 and Test Sample Nos. 19 to 27, the content mass ratio of the nine kinds of free amino acids to the total free amino acids, the content mass ratio of the total free amino acids to the acetic acid, the content ratio of the maltotriose to the acetic acid, the addition amount of the acetic acid-containing seasoning liquid, and results of the syneresis evaluation and the sensory test are shown in Table 2 (Table 2-1-1 to Table 2-2-2). Note that in (1) of Example 2, the same syneresis evaluation and sensory evaluation of the precooked sliced-dried radishes obtained by adding and mixing the addition amount of the acetic acid-containing seasoning liquid (Test Sample Nos. 19 to 27) in each test sample to the sliced-dried radish (Comparative Example No. 1) prepared without the addition of acetic acid and a free amino acid after storage for 0 hours were also performed. As a result, the same results as in the test samples added with the acetic acid-containing seasoning liquid (Test Sample Nos. 19 to 27) before cooking were obtained.

(Example 4) 1. Acetic Acid-Containing Seasoning Liquid, (1) Preparation of test sample. The types and mixing amounts of various raw materials were changed according to the following Table 3 (Table 3-1-1 to Table 3-2), thereby preparing Test Sample Nos. 28 to 36 of the acetic acid-containing seasoning liquids. Note that water was used in such an amount that water was filled up to be 1000 g (indicated by symbol "+" in Table 3).

(2) Evaluation procedure of test sample, (2-1) Content mass ratio of nine kinds of free amino acids to total free amino acids. Regarding Test Sample Nos. 28 to 36 of the acetic acid-containing seasoning liquids prepared in the above (1), the content of each free amino acid of the total free amino acids was measured to obtain nine kinds of free amino acids with respect to the total free amino acids, by the same procedure as in (2) of Example 1.

(2-2) Content mass of maltotriose. Regarding Test Sample Nos. 28 to 36 prepared in the above (1), the content of the maltotriose was measured under the following conditions using high-performance liquid chromatography (HPLC). HPLC conditions are as follows.

| Column | HILICpak VG-50 4E (manufactured by Showa Denko K.K.) |
|---|---|
| Mobile phase | 65% acetonitrile |
| Detection | UV detector 210 nm |
| Flow rate | 0.8 mL/min |
| Column temperature | 40°C |

(2-3) Content mass of acetic acid. Regarding Test Sample Nos. 28 to 36 prepared in the above (1), the content of the acetic acid was measured under the following conditions using high-performance liquid chromatography (HPLC). HPLC conditions are as follows.

| Column | Shodex KC811 (8 mm ID × 300 mm) (manufactured by Showa Denko K.K.) |
|---|---|
| Eluent | 0.1% phosphoric acid solution |
| Detection | UV detector 210 nm |
| Flow rate | 1.0 mL/min |
| Column temperature | 50°C |

(2-4) Content mass ratio of total free amino acids to acetic acid and content mass ratio of maltotriose to acetic acid. Regarding Test Sample Nos. 28 to 36 prepared in the above (1), the content mass ratio of the total free amino acids to the acetic acid was obtained by dividing the content of the total free amino acids by the content of the acetic acid. Furthermore, the content mass ratio of the maltotriose to the acetic acid was obtained by dividing the content of the maltotriose by the content of the acetic acid.

2. Precooked Food, 2.1. Sliced-dried radish or *kiriboshi daikon,* (1) Preparation of test sample. Next, the precooked sliced-dried radishes (Test Sample Nos. 28 to 30) were obtained using the acetic acid-containing seasoning liquids (Test Sample Nos. 28 to 30) prepared in (1) of the above 1 according to the procedure of (1) of Example 2.

(2) Evaluation procedure of test sample, (2-1) Evaluation of syneresis. Regarding the precooked sliced-dried radishes prepared in the above (1) (Test Sample Nos. 28 to 30), the evaluation of syneresis of the precooked food (sliced-dried radish) during storage at ordinary temperature was performed. Note that the evaluation was performed by the following procedure. One hundred grams (100 g) of the precooked sliced-dried radishes prepared in the above (1) (Test Sample Nos. 28 to 30) were divided and put in containers. Next, the sliced-dried radishes immediately after production and after storage at ordinary temperature for 6 hours, 12 hours, 24 hours, and 48 hours were left for 10 minutes in an inclined state at an inclination of 45° while paying attention that the sliced-dried radishes did not slip out. Thereafter, only broth accumulating at the bottom of the container was taken out, and the weight thereof was measured to be regarded as syneresis weight. Each syneresis rate in respective storage times (6 hours, 12 hours, 24 hours, and 48 hours) of respective test samples was calculated from the syneresis weight obtained above using the following formula: Syneresis rate (%) = (Syneresis weight of each test sample in respective storage times/Syneresis weight of each test sample immediately after production × 100). The evaluation was performed with five grades described below based on the syneresis rate obtained above. Furthermore, also regarding test samples heated again by a microwave oven at 500 W for 1 minute immediately after production and after storage at ordinary temperature for 6 hours, 12 hours, 24 hours, and 48 hours, syneresis was evaluated by the same procedure as described above.

The five grades are as follows.

| | |
|---|---|
| 5 | The syneresis rate is less than 101%, and syneresis is particularly suppressed |
| 4 | The syneresis rate is in a range of 101% or more to less than 105%, and syneresis is suppressed |
| 3 | The syneresis rate is in a range of 105% or more to less than 110%, and syneresis is slightly suppressed |
| 2 | The syneresis rate is in a range of 110% or more to less than 115%, and syneresis is not suppressed much |
| 1 | The syneresis rate is 115% or more, and syneresis is not suppressed |

(2-2) Sensory test. Regarding the precooked sliced-dried radishes prepared in the above (1) (Test Sample Nos. 28 to 30), sensory tests of "color immediately after production", "color after 6 hours", "color after 12 hours", "color after 24 hours", "color after 48 hours", "flavor immediately after production", "flavor after 6 hours", "flavor after 12 hours", "flavor after 24 hours", "flavor after 48 hours", and "acidic taste/acid odor and choke immediately after production" were performed. Regarding the color, as comparing samples immediately after production (storage: 0 hours) of respective test samples, the color in respective storage times was evaluated with five-grade intensity described below.

The five grades are as follows.

| | |
|---|---|
| Intensity 1 | The color of the ingredient is cloudy, there is no vivid color, and the color development is very poor |
| Intensity 2 | The color of the ingredient is slightly cloudy, there is almost no vivid color, and the color development is poor |
| Intensity 3 | The color of the ingredient, the vivid color of the ingredient, and the color development are equal |
| Intensity 4 | The color of the ingredient is vivid and the color development is good |
| Intensity 5 | The color of the ingredient is very vivid and the color development is extremely good |

Furthermore, regarding the flavor, as comparing samples immediately after production (storage: 0 hours) of respective test samples, the flavor in respective storage times was evaluated with five-grade intensity described below.

The five grades are as follows.

| | |
|---|---|
| Intensity 1 | The inherent taste of the ingredient is not felt at all, and the flavor balance is extremely unbalanced |
| Intensity 2 | The inherent taste of the ingredient is not felt, and the flavor balance is unbalanced |
| Intensity 3 | The inherent taste of the ingredient is slightly felt, and the flavor balance is slightly good |
| Intensity 4 | The inherent taste of the ingredient is felt, and the flavor balance is good |
| Intensity 5 | The inherent taste of the ingredient is very strongly felt, and the flavor balance is extremely good |

Further, regarding the acidic taste/acid odor and "choke", samples immediately after production (storage: 0 hours) of respective test samples were evaluated with five-grade intensity described below. Note that all of the sensory tests were performed by ten skilled panels, and the panels having performed the sensory test are skilled panels who are usually well aware of commercially available precooked foods that are generally distributed and also sufficiently comprehend a general level ("normal" in the evaluation) of each evaluation item.

The five grades are as follows.

| | |
|---|---|
| Intensity 1 | The acidic taste/acid odor is extremely felt, and the "choke" is extremely felt |
| Intensity 2 | The acidic taste/acid odor is strongly felt, and the "choke" is strongly felt |
| Intensity 3 | The acidic taste/acid odor is felt, and the "choke" is slightly felt |
| Intensity 4 | The acidic taste/acid odor is mild, and the "choke" is hardly felt |
| Intensity 5 | The acidic taste/acid odor is extremely mild, and the "choke" is not felt at all |

(3) Evaluation result of test sample. The acetic acid concentration of Test Sample Nos. 28 to 30, the content mass ratio of the nine kinds of free amino acids to the total free amino acids, the content mass ratio of the total free amino acids to the acetic acid, the content ratio of the maltotriose to the acetic acid, the addition amount of the acetic acid-containing seasoning liquid, and results of the syneresis evaluation and the sensory test are shown in Table 3 (Table 3-1-1 to Table 3-2). Note that in (1) of Example 2, the same syneresis evaluation and sensory evaluation of the precooked sliced-dried radishes obtained by adding and mixing the addition amount of the acetic acid-containing seasoning liquid (Test Sample Nos. 28 to 30) in each test sample to the sliced-dried radish (Comparative Example No. 1) prepared without the addition of acetic acid and a free amino acid after storage for 0 hours were also performed. As a result, the same results as in the test samples added with the acetic acid-containing seasoning liquid (Test Sample Nos. 28 to 30) before cooking were obtained.

2.2. Simmered chicken and root vegetables (*Chikuzen*-*ni*) and steamed pork and vegetables. Precooked simmered chicken and root vegetables or *Chikuzen-ni* (Test Sample Nos. 31 to 33) and steamed pork and vegetables (Test Sample Nos. 34 to 36) were obtained using the acetic acid-containing seasoning liquid (Test Sample Nos. 31 to 36) prepared in (1) of the above 1 according to the following procedure. The syneresis evaluation and the sensory test of these simmered chicken and root vegetables (Test Sample Nos. 31 to 33) and steamed pork and vegetables (Test Sample Nos. 34 to 36) of the precooked foods were performed according to the procedure of (2) of the above 2.1. The acetic acid concentration, the content mass ratio of the nine kinds of free amino acids to the total free amino acids, the content mass ratio of the total free amino acids to the acetic acid, the content ratio of the maltotriose to the acetic acid, the addition amount of the acetic acid-containing seasoning liquid, and results of syneresis evaluation and the sensory test are shown in Table 3 (Table 3-1-1 to Table 3-2).

### (Materials for simmered chicken and root vegetables or Chikuzen-ni)

| Chicken thigh | 1 piece (about 300 g) |
|---|---|
| Dried *shiitake* mushroom | 4 to 5 pieces |
| Konjac | 1 piece |
| Lotus root | 300 g |
| Burdock root | 1 (about 100 g) |
| Carrot | 1/2 |
| Taro root | 400 g (medium size: 5 to 6) |
| Snow peas | 6 to 7 pieces |
| Soaking liquid of *shiitake* mushroom | 150 ml used |
| *Koikuchi* soy sauce | 5 tablespoons |
| *Sake* or alcoholic liquor | 4 tablespoons |
| *Mirin* | 4 tablespoons |

The cooking procedure of the simmered chicken and root vegetables or *Chikuzen-ni* is as described below. The above-described materials were cut into an appropriate size and the whole amount of the materials was put into a pot. Test Sample Nos. 31 to 33 of the acetic acid-containing seasoning liquids were added at an addition amount described in Table 3 with respect to the total mass of these materials and the seasoning and heated on a medium fire for about 15 minutes, thereby obtaining simmered chicken and root vegetables or *Chikuzen-ni* (Test Sample Nos. 31 to 33) as the precooked food.

### (Materials for steamed pork and vegetables)

| | |
|---|---|
| Pumpkin | 80 g |
| Broccoli | 1/4 |
| Brown beech mushroom | 80 g |
| Pork loin | 160 g |
| Water | 1 tablespoon |

The cooking procedure of the steamed pork and vegetables is as described below. In a frying pan lined with a cooking sheet, thin slices of pumpkin, broccoli cut into small pieces, and brown beech mushroom loosened by cutting off the stem were arranged. Thin slices of pork loin were placed thereon. Water was added to the frying pan, and the frying pan was covered with a lid and heated on a medium fire for about 10 minutes, thereby obtaining the steamed pork and vegetables as the cooked or processed food. Test Sample Nos. 34 to 36 of the acetic acid-containing seasoning liquids were added and mixed at an addition amount described in Table 3 with respect to the total amount of the steamed pork and vegetables as the cooked or processed food obtained here, thereby obtaining steamed pork and vegetables (Test Sample Nos. 34 to 36) as the precooked food.

**Table 1-1-1**

| | | Unit | Comparative Sample 1 | Comparative Sample 2 | Comparative Sample 3 |
|---|---|---|---|---|---|
| Acetic acid-containing seasoning liquid | Acetic acid | % by mass | 0 | 1.0 | 5.0 |
| | Total free amino acids | % by mass | 0 | 0 | 0 |
| | Nine kinds of free amino acids | % by mass | 0 | 0 | 0 |
| | Lysine | % by mass | 0 | 0 | 0 |
| | Arginine | % by mass | 0 | 0 | 0 |
| | Histidine | % by mass | 0 | 0 | 0 |
| | Total of lysine, arginine, histidine | % by mass | 0 | 0 | 0 |
| | Content ratio of lysine to nine kinds of free amino acids | % by mass | 0 | 0 | 0 |
| | Content ratio of arginine to nine kinds of free amino acids | % by mass | 0 | 0 | 0 |
| | Content ratio of histidine to nine kinds of free amino acids | % by mass | 0 | 0 | 0 |
| | Content ratio of lysine, arginine, histidine to nine kinds of free amino acids | % by mass | 0 | 0 | 0 |
| | Content ratio of nine kinds of free amino acids to total free amino acids | - | - | - | - |
| | Content ratio of total free amino acids to acetic acid | - | - | 0.00 | 0.00 |
| | pH | - | - | 2.90 | 2.64 |
| Evaluation of acetic acid-contaning seasoning liquid | Flavor balance as acetic acid-containing seasoning liquid | Evaluation | - | ⊚ | ⊚ |
| | | Remarks | | | |
| Precooked Food (Sliced and dried radish) | Addition amount of acetic acid-containing seasoning liquid relative to total amount of food ingredient and other raw materials | % by mass | | 5 | 10 |
| | Content of acetic acid relative to total amount of food ingredient and other raw materials | % by mass | | 0.05 | 0.50 |
| | Content of total free amino acids relative to total amount of food ingredient and other raw materials | % by mass | | 0 | 0 |
| | Content of nine kinds of free amino acids relative to total amount of food ingredient and other raw materials | % by mass | 0 | 0 | 0 |
| Evaluation of Precooked Food (Sliced and dried radish) | Syneresis after 6 hours | - | Comparison | 1 | 1 |
| | Syneresis after 12 hours | - | Comparison | 1 | 1 |
| | Syneresis after 24 hours | - | Comparison | 1 | 1 |
| | Syneresis after 48 hours | - | Comparison | 1 | 1 |
| | Syneresis immediately after production (with re-heating) | - | Comparison | 1 | 1 |
| | Syneresis after 6 hours (with re-heating) | - | Comparison | 1 | 1 |
| | Syneresis after 12 hours (with re-heating) | - | Comparison | 1 | 1 |
| | Syneresis after 24 hours (with re-heating) | - | Comparison | 1 | 1 |
| | Syneresis after 48 hours (with re-heating) | - | Comparison | 1 | 1 |
| | Color immediately after production | - | Comparison | 3 | 3 |
| | Color after 6 hours | - | 2.7 | 2.8 | 2.7 |
| | Color after 12 hours | - | 2.5 | 2.5 | 2.5 |
| | Color after 24 hours | - | 2.1 | 2.2 | 2 |
| | Color after 48 hours | - | 1.4 | 1.9 | 1.7 |
| | Acidic taste/acid odor and "choke" immediately after production | - | 5 | 2.3 | 1 |

**Table 1-1-2**

| | | Unit | Test Sample 1 | Test Sample 2 | Test Sample 3 | Test Sample 4 |
|---|---|---|---|---|---|---|
| Acetic acid-containing seasoning liquid | Acetic acid | % by mass | 2.5 | 3.0 | 3.0 | 0.3 |
| | Total free amino acids | % by mass | 0.030 | 0.050 | 0.050 | 0.050 |
| | Nine kinds of free amino acids | % by mass | 0.020 | 0.025 | 0.025 | 0.025 |
| | Lysine | % by mass | 0.004 | 0.005 | 0.005 | 0.004 |
| | Arginine | % by mass | 0.001 | 0.001 | 0.001 | 0.002 |
| | Histidine | % by mass | 0.001 | 0.001 | 0.001 | 0.002 |
| | Total of lysine, arginine, histidine | % by mass | 0.005 | 0.007 | 0.007 | 0.008 |
| | Content ratio of lysine to nine kinds of free amino acids | % by mass | 20.0% | 20.0% | 20.0% | 16.0% |
| | Content ratio of arginine to nine kinds of free amino acids | % by mass | 3.0% | 3.0% | 3.0% | 8.0% |
| | Content ratio of histidine to nine kinds of free amino acids | % by mass | 3.0% | 3.0% | 3.0% | 6.0% |
| | Content ratio of lysine, arginine, histidine to nine kinds of free amino acids | % by mass | 26% | 26% | 26% | 30% |
| | Content ratio of nine kinds of free amino acids to total free amino acids | - | 0.67 | 0.50 | 0.50 | 0.50 |
| | Content ratio of total free amino acids to acetic acid | - | 0.01 | 0.02 | 0.02 | 0.17 |
| | pH | - | 2.92 | 3.12 | 3.12 | 3.30 |
| Evaluation of acetic acid-conta ning seasoning liquid | Flavor balance as acetic acid-containing seasoning liquid | Evaluation | ⊚ | ⊚ | ⊚ | ⊚ |
| | | Remarks | | | | |
| Precooked Food (Sliced and dried radish) | Addition amount of acetic acid-containing seasoning liquid relative to total amount of food ingredient and other raw materials | % by mass | 6 | 5 | 2 | 30 |
| | Content of acetic acid relative to total amount of food ingredient and other raw materials | % by mass | 0.15 | 0.15 | 0.06 | 0.09 |
| | Content of total free amino acids relative to total amount of food ingredient and other raw materials | % by mass | 0.0018 | 0.0025 | 0.001 | 0.015 |
| | Content ot nine kinds ot tree amino acids relative to total amount of food ingredient and other raw materials | % by mass | 0.0018 | 0.0025 | 0.001 | 0.015 |
| Evaluation of Precooked Food (Sliced and dried radish) | Syneresis after 6 hours | - | 2 | 3 | 3 | 4 |
| | Syneresis after 12 hours | - | 3 | 3 | 3 | 5 |
| | Syneresis after 24 hours | - | 3 | 3 | 3 | 5 |
| | Syneresis after 48 hours | - | 3 | 4 | 4 | 5 |
| | Syneresis immediately after production (with re-heating) | - | 2 | 3 | 3 | 5 |
| | Syneresis after 6 hours (with re-heating) | - | 3 | 3 | 3 | 4 |
| | Syneresis after 12 hours (with re-heating) | - | 3 | 3 | 3 | 5 |
| | Syneresis after 24 hours (with re-heating) | - | 3 | 3 | 4 | 5 |
| | Syneresis after 48 hours (with re-heating) | - | 3 | 4 | 4 | 5 |
| | Color immediately after production | - | 3.2 | 3.3 | 3.3 | 4.4 |
| | Color after 6 hours | - | 3.2 | 3.3 | 3.3 | 4.1 |
| | Color after 12 hours | - | 3 | 3 | 3 | 4.2 |
| | Color after 24 hours | - | 3 | 3 | 3 | 4.2 |
| | Color after 48 hours | - | 2.7 | 2.8 | 3 | 4.2 |
| | Acidic taste/acid odor and "choke" immediately after production | - | 3.1 | 3.2 | 3.7 | 3.6 |

**Table 1-2-1**

| | | Unit | Test Sample 5 | Test Sample 6 | Test Sample 7 |
|---|---|---|---|---|---|
| Acetic acid-containing seasoning liquid | Acetic acid | % by mass | 1.0 | 2.0 | 3.0 |
| | Total free amino acids | % by mass | 0.100 | 0.150 | 0.300 |
| | Nine kinds of free amino acids | % by mass | 0.040 | 0.070 | 0.080 |
| | Lysine | % by mass | 0.003 | 0.020 | 0.016 |
| | Arginine | % by mass | 0.003 | 0.005 | 0.002 |
| | Histidine | % by mass | 0.003 | 0.001 | 0.002 |
| | Total of lysine, arginine, histidine | % by mass | 0.009 | 0.026 | 0.020 |
| | Content ratio of lysine to nine kinds of free amino acids | % by mass | 7.5% | 28.6% | 20.0% |
| | Content ratio of arginine to nine kinds of free amino acids | % by mass | 7.5% | 7.1% | 2.5% |
| | Content ratio of histidine to nine kinds of free amino acids | % by mass | 7.5% | 1.4% | 3.0% |
| | Content ratio of lysine, arginine, histidine to nine kinds of free amino acids | % by mass | 23% | 37% | 26% |
| | Content ratio of nine kinds of free amino acids to total free amino acids | - | 0.40 | 0.47 | 0.27 |
| | Content ratio of total free amino acids to acetic acid | - | 0.10 | 0.08 | 0.10 |
| | pH | - | 3.32 | 3.28 | 3.20 |
| Evaluation of ace. c acid-containing seasoning liquid | Flavor balance as acetic acid-containing seasoning liquid | Evaluation | ⊚ | ⊚ | ⊚ |
| | | Remarks | | | |
| Precooked Food (Sliced and dried radish) | Addition amount of acetic acid-containing seasoning liquid relative to total amount of food ingredient and other raw materials | % by mass | 15 | 5 | 5 |
| | Content of acetic acid relative to total amount of food ingredient and other raw materials | % by mass | 0.15 | 0.10 | 0.15 |
| | Content of total free amino acids relative to total amount of food ingredient and other raw materials | % by mass | 0.015 | 0.0075 | 0.015 |
| | Content of nine kinds of free amino acids relative to total amount of food ingredient and other raw materials | % by mass | 0.015 | 0.0075 | 0.015 |
| Evaluation of Precooked Food (Sliced and dried radish) | Syneresis after 6 hours | - | 4 | 4 | 3 |
| | Syneresis after 12 hours | - | 4 | 4 | 3 |
| | Syneresis after 24 hours | - | 4 | 5 | 3 |
| | Syneresis after 48 hours | - | 4 | 5 | 3 |
| | Syneresis immediately after production (with re-heating) | - | 3 | 4 | 3 |
| | Syneresis after 6 hours (with re-heating) | - | 4 | 4 | 3 |
| | Syneresis after 12 hours (with re-heating) | - | 4 | 5 | 3 |
| | Syneresis after 24 hours (with re-heating) | - | 4 | 5 | 3 |
| | Syneresis after 48 hours (with re-heating) | - | 4 | 5 | 4 |
| | Color immediately after production | - | 3.9 | 4.2 | 3.2 |
| | Color after 6 hours | - | 3.9 | 4.1 | 3.2 |
| | Color after 12 hours | - | 3.8 | 4.3 | 3.1 |
| | Color after 24 hours | - | 3.5 | 4.3 | 3 |
| | Color after 48 hours | - | 3.4 | 4.2 | 3 |
| | Acidic taste/acid odor and "choke" immediately after production | - | 3.5 | 3.8 | 3.5 |

**Table 1-2-2**

| | | Unit | Test Sample 8 | Test Sample 9 | Test Sample 10 | Test Sample 11 |
|---|---|---|---|---|---|---|
| Acetic acid-containing seasoning liquid | Acetic acid | % by mass | 3.5 | 3.0 | 3.0 | 3.0 |
| | Total free amino acids | % by mass | 0.400 | 0.500 | 0.600 | 0.600 |
| | Nine kinds of free amino acids | % by mass | 0.150 | 0.222 | 0.300 | 0.300 |
| | Lysine | % by mass | 0.030 | 0.012 | 0.060 | 0.020 |
| | Arginine | % by mass | 0.005 | 0.036 | 0.009 | 0.050 |
| | Histidine | % by mass | 0.005 | 0.003 | 0.009 | 0.003 |
| | Total of lysine, arginine, histidine | % by mass | 0.039 | 0.051 | 0.078 | 0.073 |
| | Content ratio of lysine to nine kinds of free amino acids | % by mass | 20.0% | 5.4% | 20.0% | 6.7% |
| | Content ratio of arginine to nine kinds of free amino acids | % by mass | 3.0% | 16.2% | 3.0% | 16.7% |
| | Content ratio of histidine to nine kinds of free amino acids | % by mass | 3.0% | 1.3% | 3.0% | 1.0% |
| | Content ratio of lysine, arginine, histidine to nine kinds of free amino acids | % by mass | 26% | 23% | 26% | 24% |
| | Content ratio of nine kinds of free amino acids to total free amino acids | - | 0.38 | 0.44 | 0.50 | 0.50 |
| | Content ratio of total free amino acids to acetic acid | - | 0.13 | 0.17 | 0.20 | 0.20 |
| | pH | - | 3.36 | 3.54 | 3.64 | 3.71 |
| Evaluation of acetic acid-contaning seasoning liquid | Flavor balance as acetic acid-containing seasoning liquid | Evaluation | ⊚ | ⊚ | ⊚ | ⊚ |
| | | Remarks | | | | |
| Precooked Food (Sliced and dried radish) | Addition amount of acetic acid-containing seasoning liquid relative to total amount of food ingredient and other raw materials | % by mass | 5 | 5 | 10 | 10 |
| | Content of acetic acid relative to total amount of food ingredient and other raw materials | % by mass | 0.15 | 0.15 | 0.30 | 0.30 |
| | Content of total free amino acids relative to total amount of food ingredient and other raw materials | % by mass | 0.02 | 0.025 | 0.06 | 0.06 |
| | Content of nine kinds of free amino acids relative to total amount of food ingredient and other raw materials | % by mass | 0.02 | 0.025 | 0.06 | 0.06 |
| Evaluation of Precooked Food (Sliced and dried radish) | Syneresis after 6 hours | - | 3 | 4 | 5 | 5 |
| | Syneresis after 12 hours | - | 3 | 4 | 5 | 5 |
| | Syneresis after 24 hours | - | 3 | 5 | 5 | 5 |
| | Syneresis after 48 hours | - | 3 | 5 | 5 | 5 |
| | Syneresis immediately after production (with re-heating) | - | 3 | 4 | 5 | 5 |
| | Syneresis after 6 hours (with re-heating) | - | 3 | 4 | 5 | 5 |
| | Syneresis after 12 hours (with re-heating) | - | 3 | 5 | 5 | 5 |
| | Syneresis after 24 hours (with re-heating) | - | 4 | 5 | 5 | 5 |
| | Syneresis after 48 hours (with re-heating) | - | 4 | 5 | 5 | 5 |
| | Color immediately after production | - | 3.5 | 4.7 | 4.8 | 4.5 |
| | Color after 6 hours | - | 3.4 | 4.6 | 4.7 | 4.4 |
| | Color after 12 hours | - | 3.4 | 4.6 | 4.6 | 4.3 |
| | Color after 24 hours | - | 3.2 | 4.3 | 4.3 | 4.3 |
| | Color after 48 hours | - | 3.2 | 4.2 | 4.3 | 4.3 |
| | Acidic taste/acid odor and "choke" immediately after production | - | 3.5 | 3.7 | 3.3 | 3.3 |

**Table 1-3-1**

| | | Unit | Test Sample 12 | Test Sample 13 | Test Sample 14 |
|---|---|---|---|---|---|
| Acetic acid-containing seasoning liquid | Acetic acid | % by mass | 3.0 | 3.0 | 3.0 |
| | Total free amino acids | % by mass | 0.600 | 0.600 | 0.700 |
| | Nine kinds of free amino acids | % by mass | 0.300 | 0.300 | 0.420 |
| | Lysine | % by mass | 0.038 | 0.025 | 0.084 |
| | Arginine | % by mass | 0.006 | 0.004 | 0.013 |
| | Histidine | % by mass | 0.006 | 0.004 | 0.013 |
| | Total of lysine, arginine, histidine | % by mass | 0.050 | 0.033 | 0.109 |
| | Content ratio of lysine to nine kinds of free amino acids | % by mass | 12.5% | 8.3% | 20.0% |
| | Content ratio of arginine to nine kinds of free amino acids | % by mass | 2.0% | 1.3% | 3.0% |
| | Content ratio of histidine to nine kinds of free amino acids | % by mass | 2.0% | 1.3% | 3.0% |
| | Content ratio of lysine, arginine, histidine to nine kinds of free amino acids | % by mass | 17% | 11% | 26% |
| | Content ratio of nine kinds of free amino acids to total free amino acids | - | 0.50 | 0.50 | 0.60 |
| | Content ratio of total free amino acids to acetic acid | - | 0.20 | 0.20 | 0.23 |
| | p H | - | 3.61 | 3.54 | 3.66 |
| Evaluation of acetic acid-containing seasoning liquid | Flavor balance as acetic acid-containing seasoning liquid | Evaluation | ⊚ | ⊚ | ⊚ |
| | | Remarks | | | |
| Precooked Food (Sliced and dried radish) | Addition amount of acetic acid-containing seasoning liquid relative to total amount of food ingredient and other raw materials | % by mass | 10 | 10 | 15 |
| | Content of acetic acid relative to total amount of food ingredient and other raw materials | % by mass | 0.30 | 0.30 | 0.45 |
| | Content of total free amino acids relative to total amount of food ingredient and other raw materials | % by mass | 0.06 | 0.06 | 0.105 |
| | Content of nine kinds of free amino acids relative to total amount of food ingredient and other raw materials | % by mass | 0.06 | 0.06 | 0.105 |
| Evaluation of Precooked Food (Sliced and dried radish) | Syneresis after 6 hours | - | 3 | 3 | 4 |
| | Syneresis after 12 hours | - | 3 | 3 | 4 |
| | Syneresis after 24 hours | - | 4 | 4 | 5 |
| | Syneresis after 48 hours | - | 4 | 4 | 5 |
| | Syneresis immediately after production (with re-heating) | - | 3 | 3 | 5 |
| | Syneresis after 6 hours (with re-heating) | - | 4 | 3 | 5 |
| | Syneresis after 12 hours (with re-heating) | - | 4 | 4 | 5 |
| | Syneresis after 24 hours (with re-heating) | - | 4 | 4 | 4 |
| | Syneresis after 48 hours (with re-heating) | - | 4 | 4 | 5 |
| | Color immediately after production | - | 4.2 | 4 | 4.3 |
| | Color after 6 hours | - | 4.2 | 4 | 4.1 |
| | Color after 12 hours | - | 4.1 | 3.8 | 4.1 |
| | Color after 24 hours | - | 4.2 | 3.8 | 4.1 |
| | Color after 48 hours | - | 4.1 | 3.7 | 3.8 |
| | Acidic taste/acid odor and "choke" immediately after production | - | 3.2 | 3.2 | 2.5 |

**Table 1-3-2**

| | | Unit | Test Sample 15 | Test Sample 16 | Test Sample 17 | Test Sample 18 |
|---|---|---|---|---|---|---|
| Acetic acid-containing seasoning liquid | Acetic acid | % by mass | 3.5 | 3.5 | 5.0 | 10.0 |
| | Total free amino acids | % by mass | 0.900 | 1.000 | 0.500 | 1.500 |
| | Nine kinds of free amino acids | % by mass | 0.600 | 0.700 | 0.222 | 0.750 |
| | Lysine | % by mass | 0.120 | 0.140 | 0.044 | 0.150 |
| | Arginine | % by mass | 0.018 | 0.021 | 0.007 | 0.023 |
| | Histidine | % by mass | 0.018 | 0.021 | 0.007 | 0.023 |
| | Total of lysine, arginine, histidine | % by mass | 0.156 | 0.182 | 0.058 | 0.195 |
| | Content ratio of lysine to nine kinds of free amino acids | % by mass | 20.0% | 20.0% | 20.0% | 20.0% |
| | Content ratio of arginine to nine kinds of free amino acids | % by mass | 3.0% | 3.0% | 3.0% | 3.0% |
| | Content ratio of histidine to nine kinds of free amino acids | % by mass | 3.0% | 3.0% | 3.0% | 3.0% |
| | Content ratio of lysine, arginine, histidine to nine kinds of free amino acids | % by mass | 26% | 26% | 26% | 26% |
| | Content ratio of nine kinds of free amino acids to total free amino acids | - | 0.67 | 0.70 | 0.44 | 0.50 |
| | Content ratio of total free amino acids to acetic acid | - | 0.26 | 0.29 | 0.10 | 0.15 |
| | p H | - | 3.70 | 3.76 | 3.28 | 2.86 |
| Evaluation of acetic acid-contaning seasoning liquid | Flavor balance as acetic acid-containing seasoning liquid | Evaluation | ○ | ○ | ⊚ | △ |
| | | Remarks | Bitterness is slightly felt | Bitterness is slightly felt | | Bitterness is strongly felt |
| Precooked Food (Sliced and dried radish) | Addition amount of acetic acid-containing seasoning liquid relative to total amount of food ingredient and other raw materials | % by mass | 4.3 | 4.3 | 10 | |
| | Content of acetic acid relative to total amount of food ingredient and other raw materials | % by mass | 0.15 | 0.15 | 0.50 | |
| | Content of total free amino acids relative to total amount of food ingredient and other raw materials | % by mass | 0.04 | 0.043 | 0.05 | |
| | Content of nine kinds of free amino acids relative to total amount of food ingredient and other raw materials | % by mass | 0.04 | 0.04 | 0.05 | |
| Evaluation of Precooked Food (Sliced and dried radish) | Syneresis after 6 hours | - | 3 | 3 | 4 | |
| | Syneresis after 12 hours | - | 3 | 3 | 5 | |
| | Syneresis after 24 hours | - | 4 | 3 | 5 | |
| | Syneresis after 48 hours | - | 4 | 3 | 5 | |
| | Syneresis immediately after production (with re-heating) | - | 3 | 3 | 5 | |
| | Syneresis after 6 hours (with re-heating) | - | 3 | 3 | 5 | |
| | Syneresis after 12 hours (with re-heating) | - | 3 | 3 | 4 | |
| | Syneresis after 24 hours (with re-heating) | - | 4 | 3 | 4 | |
| | Syneresis after 48 hours (with re-heating) | - | 4 | 4 | 5 | |
| | Color immediately after production | - | 3.9 | 3.6 | 4.6 | |
| | Color after 6 hours | - | 3.8 | 3.4 | 4.6 | |
| | Color after 12 hours | - | 3.7 | 3.4 | 4.5 | |
| | Color after 24 hours | - | 3.7 | 3.2 | 4.4 | |
| | Color after 48 hours | - | 3.6 | 3.2 | 4.3 | |
| | Acidic taste/acid odor and "choke" immediately after production | - | 3.5 | 3.5 | 2.2 | |

**Table 2-1-1**

| | | Unit | Comparative Sample 1 | Comparative Sample 2 | Comparative Sample 3 |
|---|---|---|---|---|---|
| Acetic acid-containing seasoning liquid | Acetic acid | %by mass | 0 | 1.0 | 5.0 |
| | Total free amino acids | %by mass | 0 | 0 | 0 |
| | Nine kinds of free amino acids | %by mass | 0 | 0 | 0 |
| | Content ratio of nine kinds of free amino acids to total free amino acids | - | - | - | - |
| | Content ratio of total free amino acids to acetic acid | - | - | 0.00 | 0.00 |
| | pH | - | - | 2.90 | 2.64 |
| | Maltotriose | %by mass | 0 | 0 | 0 |
| | Content ratio of maltotriose to acetic acids | - | - | - | - |
| Evaluation of acetic acid-containing seasoning liquid | Flavor balance as acetic acid-containing seasoning liquid | Evaluation | - | ⊚ | ⊚ |
| | | Remarks | | | |
| Precooked Food (Sliced and dried radish) | Addition amount of acetic acid-containing seasoning liquid relative to total amount of food ingredient and other raw materials | %by mass | 0 | 5 | 10 |
| | Content of acetic acid relative to total amount of food ingredient and other raw materials | %by mass | 0.00 | 0.05 | 0.50 |
| | Content of total free amino acids relative to total amount of food ingredient and other raw materials | %by mass | 0 | 0 | 0 |
| | Content of nine kinds of free amino acids relative to total amount of food ingredient and other raw materials | %by mass | 0 | 0 | 0 |
| | Content of maltotriose relative to total amount of food ingredient and other raw materials | %by mass | 0 | 0 | 0 |
| Evaluation of Precooked Food (Sliced and dried radish) | Syneresis after 6 hours | - | Comparison | 1 | 1 |
| | Syneresis after 12 hours | - | Comparison | 1 | 1 |
| | Syneresis after 24 hours | - | Comparison | 1 | 1 |
| | Syneresis after 48 hours | - | Comparison | 1 | 1 |
| | Syneresis immediately after production (with re-heating) | - | Comparison | 1 | 1 |
| | Syneresis after 6 hours (with re-heating) | - | Comparison | 1 | 1 |
| | Syneresis after 12 hours (with re-heating) | - | Comparison | 1 | 1 |
| | Syneresis after 24 hours (with re-heating) | - | Comparison | 1 | 1 |
| | Syneresis after 48 hours (with re-heating) | - | Comparison | 1 | 1 |
| | Color immediately after production | - | Comparison | 3 | 3 |
| | Color after 6 hours | - | 2.7 | 2.8 | 2.7 |
| | Color after 12 hours | - | 2.5 | 2.5 | 2.5 |
| | Color after 24 hours | - | 2.3 | 2.2 | 2 |
| | Color after 48 hours | - | 1.5 | 1.9 | 1.3 |
| | Acidic taste/acid odor and "choke" immediately after production | - | 5 | 2.3 | 1 |
| | Mildness of acidic taste | - | - | ○ | × |
| | | Remarks | | Mildness of acidic taste lacks | Acidic taste is strongly felt and mildness is not felt |

**Table 2-1-2**

| | | Unit | Test Sample 19 | Test Sample 20 | Test Sample 21 |
|---|---|---|---|---|---|
| Acetic acid-containing seasoning liquid | Acetic acid | %by mass | 3.0 | 0.3 | 2.0 |
| | Total free amino acids | %by mass | 0.050 | 0.050 | 0.150 |
| | Nine kinds of free amino acids | %by mass | 0.025 | 0.025 | 0.070 |
| | Content ratio of nine kinds of free amino acids to total free amino acids | - | 0.50 | 0.50 | 0.47 |
| | Content ratio of total free amino acids to acetic acid | - | 0.02 | 0.17 | 0.08 |
| | pH | - | 3.10 | 3.28 | 3.28 |
| | Maltotriose | %by mass | 0.036 | 0.1 | 0.2 |
| | Content ratio of maltotriose to acetic acids | - | 0.01 | 0.33 | 0.10 |
| Evaluation of acetic acid-containing seasoning liquid | Flavor balance as acetic acid-containing seasoning liquid | Evaluation | ⊚ | ⊚ | ⊚ |
| | | Remarks | | | |
| Precooked Food (Sliced and dried radish) | Addition amount of acetic acid-containing seasoning liquid relative to total amount of food ingredient and other raw materials | %by mass | 2 | 30 | 5 |
| | Content of acetic acid relative to total amount of food ingredient and other raw materials | %by mass | 0.06 | 0.09 | 0.10 |
| | Content of total free amino acids relative to total amount of food ingredient and other raw materials | %by mass | 0.001 | 0.015 | 0.0075 |
| | Content of nine kinds of free amino acids relative to total amount of food ingredient and other raw materials | %by mass | 0.001 | 0.015 | 0.0075 |
| | Content of maltotriose relative to total amount of food ingredient and other raw materials | %by mass | 0.001 | 0.030 | 0.010 |
| Evaluation of Precooked Food (Sliced and dried radish) | Syneresis after 6 hours | - | 3 | 4 | 4 |
| | Syneresis after 12 hours | - | 3 | 5 | 4 |
| | Syneresis after 24 hours | - | 3 | 5 | 5 |
| | Syneresis after 48 hours | - | 3 | 5 | 5 |
| | Syneresis immediately after production (with re-heating) | - | 3 | 5 | 4 |
| | Syneresis after 6 hours (with re-heating) | - | 3 | 4 | 4 |
| | Syneresis after 12 hours (with re-heating) | - | 3 | 5 | 5 |
| | Syneresis after 24 hours (with re-heating) | - | 4 | 5 | 5 |
| | Syneresis after 48 hours (with re-heating) | - | 4 | 5 | 5 |
| | Color immediately after production | - | 3.3 | 4.3 | 4.5 |
| | Color after 6 hours | - | 3.3 | 4.2 | 4.4 |
| | Color after 12 hours | - | 3 | 4.3 | 4.3 |
| | Color after 24 hours | - | 3 | 4.3 | 4.3 |
| | Color after 48 hours | - | 3.1 | 4.3 | 4.2 |
| | Acidic taste/acid odor and "choke" immediately after production | - | 3.8 | 4.4 | 4 |
| | Mildness of acidic taste | - | ⊚ | ⊚ | ⊚ |
| | | Remarks | | | |

**Table 2-2-1**

| | | Unit | Test Sample 22 | Test Sample 23 | Test Sample 24 |
|---|---|---|---|---|---|
| Acetic acid-containing seasoning liquid | Acetic acid | %by mass | 3.0 | 3.0 | 3.0 |
| | Total free amino acids | %by mass | 0.300 | 0.400 | 0.500 |
| | Nine kinds of free amino acids | %by mass | 0.080 | 0.150 | 0.222 |
| | Content ratio of nine kinds of free amino acids to total free amino acids | - | 0.27 | 0.38 | 0.44 |
| | Content ratio of total free amino acids to acetic acid | - | 0.10 | 0.13 | 0.17 |
| | pH | - | 3.21 | 3.29 | 3.50 |
| | Maltotriose | %by mass | 3 | 1.5 | 6 |
| | Content ratio of maltotriose to acetic acids | - | 1.00 | 0.50 | 2.00 |
| Evaluation of acetic acid-containing seasoning liquid | Flavor balance as acetic acid-containing seasoning liquid | Evaluation | Ⓞ | Ⓞ | Ⓞ |
| | | Remarks | | | |
| Precooked Food (Sliced and dried radish) | Addition amount of acetic acid-containing seasoning liquid relative to total amount of food ingredient and other raw materials | %by mass | 5 | 5 | 5 |
| | Content of acetic acid relative to total amount of food ingredient and other raw materials | %by mass | 0.15 | 0.15 | 0.15 |
| | Content of total free amino acids relative to total amount of food ingredient and other raw materials | %by mass | 0.015 | 0.02 | 0.025 |
| | Content of nine kinds of free amino acids relative to total amount of food ingredient and other raw materials | %by mass | 0.015 | 0.02 | 0.025 |
| | Content of maltotriose relative to total amount of food ingredient and other raw materials | %by mass | 0.15 | 0.08 | 0.30 |
| Evaluation of Precooked Food (Sliced and dried radish) | Syneresis after 6 hours | - | 3 | 3 | 4 |
| | Syneresis after 12 hours | - | 3 | 3 | 4 |
| | Syneresis after 24 hours | - | 4 | 4 | 5 |
| | Syneresis after 48 hours | - | 4 | 4 | 5 |
| | Syneresis immediately after production (with re-heating) | - | 3 | 3 | 4 |
| | Syneresis after 6 hours (with re-heating) | - | 3 | 3 | 4 |
| | Syneresis after 12 hours (with re-heating) | - | 3 | 3 | 5 |
| | Syneresis after 24 hours (with re-heating) | - | 3 | 4 | 5 |
| | Syneresis after 48 hours (with re-heating) | - | 4 | 4 | 5 |
| | Color immediately after production | - | 3.2 | 3.5 | 4.7 |
| | Color after 6 hours | - | 3.2 | 3.5 | 4.6 |
| | Color after 12 hours | - | 3.1 | 3.4 | 4.6 |
| | Color after 24 hours | - | 3.1 | 3.2 | 4.3 |
| | Color after 48 hours | - | 3 | 3.3 | 4.2 |
| | Acidic taste/acid odor and "choke" immediately after production | - | 4.3 | 3.9 | 4.4 |
| | Mildness of acidic taste | - | Ⓞ | Ⓞ | Ⓞ |
| | | Remarks | | | |

**Table 2-2-2**

| | | Unit | Test Sample 25 | Test Sample 26 | Test Sample 27 |
|---|---|---|---|---|---|
| Acetic acid-containing seasoning liquid | Acetic acid | %by mass | 3.0 | 3.0 | 5.0 |
| | Total free amino acids | %by mass | 0.600 | 0.700 | 0.500 |
| | Nine kinds of free amino acids | %by mass | 0.300 | 0.420 | 0.222 |
| | Content ratio of nine kinds of free amino acids to total free amino acids | - | 0.50 | 0.60 | 0.44 |
| | Content ratio of total free amino acids to acetic acid | - | 0.20 | 0.23 | 0.10 |
| | pH | - | 3.62 | 3.67 | 3.22 |
| | Maltotriose | %by mass | 10 | 15 | 20 |
| | Content ratio of maltotriose to acetic acids | - | 3.33 | 5.00 | 4.00 |
| Evaluation of acetic acid-containing seasoning liquid | Flavor balance as acetic acid-containing seasoning liquid | Evaluation | Ⓞ | Ⓞ | Ⓞ |
| | | Remarks | | | |
| Precooked Food (Sliced and dried radish) | Addition amount of acetic acid-containing seasoning liquid relative to total amount of food ingredient and other raw materials | %by mass | 10 | 15 | 10 |
| | Content of acetic acid relative to total amount of food ingredient and other raw materials | %by mass | 0.30 | 0.45 | 0.50 |
| | Content of total free amino acids relative to total amount of food ingredient and other raw materials | %by mass | 0.06 | 0.105 | 0.05 |
| | Content of nine kinds of free amino acids relative to total amount of food ingredient and other raw materials | %by mass | 0.06 | 0.105 | 0.05 |
| | Content of maltotriose relative to total amount of food ingredient and other raw materials | %by mass | 1.00 | 2.25 | 2.00 |
| Evaluation of Precooked Food (Sliced and dried radish) | Syneresis after 6 hours | - | 5 | 4 | 4 |
| | Syneresis after 12 hours | - | 5 | 4 | 5 |
| | Syneresis after 24 hours | - | 5 | 5 | 5 |
| | Syneresis after 48 hours | - | 5 | 5 | 5 |
| | Syneresis immediately after production (with re-heating. | - | 5 | 5 | 5 |
| | Syneresis after 6 hours (with re-heating) | - | 5 | 5 | 5 |
| | Syneresis after 12 hours (with re-heating) | - | 5 | 5 | 4 |
| | Syneresis after 24 hours (with re-heating) | - | 5 | 4 | 5 |
| | Syneresis after 48 hours (with re-heating) | - | 5 | 5 | 5 |
| | Color immediately after production | - | 4.7 | 4.3 | 4.6 |
| | Color after 6 hours | - | 4.7 | 4.1 | 4.6 |
| | Color after 12 hours | - | 4.6 | 4.2 | 4.5 |
| | Color after 24 hours | - | 4.3 | 4.1 | 4.4 |
| | Color after 48 hours | - | 4.3 | 3.9 | 4.3 |
| | Acidic taste/acid odor and "choke" immediately after production | - | 3.7 | 3.9 | 3.7 |
| | Mildness of acidic taste | - | Ⓞ | O | Ⓞ |
| | | Remarks | | Moderate acidic taste is not felt and mildness lacks | |

**Table 3-1-1**

| | Cooking menu | Unit | Sliced and dried radish | | |
|---|---|---|---|---|---|
| | | | Test Sample 28 | Test Sample 29 | Test Sample 30 |
| Season i ng | Sake lees degradant | g | 1 | 15 | |
| Seasoning | Protein hydrolysate | g | | | 15 |
| Seasoning | Yeast extract A | g | | | |
| Seasoning | Yeast extract B | g | | | |
| Sugars | Maltotriose solution (35% by mass) | g | | 20 | 20 |
| Sugars | Sugar | g | 50 | 50 | 50 |
| Salt | Table salt | g | 30 | 30 | 30 |
| Vinegar | Brewed vinegar (acid degree:15.07) | mL | | | |
| Vinegar | Rice vinegar (acid degree:4.90) | mL | 600 | 600 | 600 |
| Vinegar | Black vinegar (acid degree:4.53) | mL | | | |
| Extract | Kelp extract | mL | | | 5 |
| Extract | Skipjack tuna extract | mL | | | |
| Season i ng | Powdered sov protein | mL | | | |
| Seasoning liquid | Dark sov sauce | mL | 10 | 20 | 50 |
| | Water | mL | + | + | + |
| Total | | g | 1000 | 1000 | 1000 |
| Acetic acid-containing seasoning liquid | Acetic acid | %by mass | 2.82 | 2.84 | 2.80 |
| | Total free amino acids | %bv mass | 0.07 | 0.340 | 0.380 |
| | Nine kinds of free amino acids | %by mass | 0.011 | 0.152 | 0.145 |
| | Content ratio of nine kinds of free amino acids to total free amino acids | - | 0.16 | 0.45 | 0.38 |
| | Content ratio of total free amino acids to acetic acid | - | 0.025 | 0.120 | 0.136 |
| | pH | | 3.22 | 3.28 | 3.34 |
| | Maltotriose | %by mass | 0 | 0.7 | 0.7 |
| | Content ratio of maltotriose to acetic acids | - | 0.00 | 0.25 | 0.25 |
| Evatuation of acetic acid-containing | Flavor balance as acetic acid-containing | Evaluation | Ⓞ | Ⓞ | Ⓞ |
| seasoning liquid | seasoning liquid | Remarks | | | |
| Precooked Food | Addition amount of acetic acid-containing seasoning liquid relative to total amount of food ingredient and other raw materials | %by mass | 2 | 2 | 2 |
| | Content of acetic acid relative to total amount of food ingredient and other raw materials | %by mass | 0.056 | 0.057 | 0.056 |
| | Content of total free amino acids relative to total amount of food ingredient and other raw materials | %by mass | 0.0014 | 0.0068 | 0.0076 |
| | Content of nine kinds of free amino acids relative to total amount of food ingredient and other raw materials | %by mass | 0.0014 | 0.0068 | 0.0076 |
| | Content of maltotriose relative to total amount of food ingredient and other raw materials | %by mass | 0.0000 | 0.0140 | 0.0140 |
| Evaluation of Precooked Food | Syneresis immediately after production | - - | Comparison | Comparison | Comparison |
| | Syneresis after 6 hours | - | 3 | 4 | 4 |
| | Syneresis after 12 hours | - | 2 | 4 | 4 |
| | Syneresis after 24 hours | - | 2 | 5 | 4 |
| | Syneresis after 48 hours | - | 1 | 5 | 5 |
| | Syneresis immediately after production (with re-heating) | - | Comparison | Comparison | Comparison |
| | Syneresis after 6 hours (with re-heating) | - | 2 | 4 | 4 |
| | Syneresis after 12 hours (with re-heating) | - | 2 | 5 | 4 |
| | Syneresis after 24 hours (with re-heating) | - | 1 | 5 | 4 |
| | Syneresis after 48 hours (with re-heating) | - | 1 | 5 | 4 |
| | Color immediately after production | - | Comparison | Comparison | Comparison |
| | Color after 6 hours | - | 3.2 | 4.3 | 4.1 |
| | Color after 12 hours | - | 3 | 4.3 | 4.3 |
| | Color after 24 hours | - | 2.2 | 4.3 | 4.3 |
| | Color after 48 hours | - | 1.9 | 4.2 | 4.2 |
| | Flavor immediately after production | - | Comparison | Comparison | Comparison |
| | Flavor after 6 hours | - | 3.5 | 4.3 | 4.3 |
| | Flavor after 12 hours | - | 3.4 | 4.3 | 4.2 |
| | Flavor after 24 hours | - | 2.2 | 4.2 | 4.2 |
| | Flavor after 48 hours | - | 1.6 | 4.1 | 4.1 |
| | Acidic taste/acid odor and "choke" immediately after production | - | 2.4 | 4.5 | 4.3 |

**Table 3-1-2**

| | Cooking menu | Unit | Simmered chicken and root vegetables (Chikuzen-ni) | | |
|---|---|---|---|---|---|
| | | | Test Sample 31 | Test Sample 32 | Test Sample 33 |
| Seasoning | Sake lees degradant | g | | | |
| Seasoning | Protein hvdrolvsate | g | | 15 | |
| Seasoning | Yeast extract A | g | 1 | | |
| Seasoning | Yeast extract B | g | | | 15 |
| Sugars | Maltotriose solution (35% by mass) | g | | 20 | 20 |
| Sugars | Sugar | g | | | |
| Salt | Table salt | g | 30 | 30 | 30 |
| V negar | Brewed vinegar (acid degree: 15.07) | mL | | | |
| Vinegar | Rice vinegar (acid degree:4.90) | mL | | | |
| Vinegar | Black vinegar (acid degree:4.53) | mL | 300 | 300 | 300 |
| Extract | Kelp extract | mL | | | |
| Extract | Skipjack tuna extract | mL | | 10 | |
| Seasoning | Powdered soy protein | mL | | | 1 |
| Seasoning liquid | Dark soy sauce | mL | | 50 | |
| | Water | mL | + | + | + |
| Total | | g | 1000 | 1000 | 1000 |
| Acetic acid-containing seasoning liquid | Acetic acid | %by mass | 1.46 | 1.44 | 1.45 |
| | Total free amino acids | %by mass | 0.060 | 0.350 | 0.310 |
| | Nine kinds of free amino acids | %by mass | 0.008 | 0.200 | 0.140 |
| | Content ratio of nine kinds of free amino acids to total free amino acids | - | 0.13 | 0.57 | 0.45 |
| | Content ratio of total free amino acids to acetic acid | - | 0.04 | 0.24 | 0.21 |
| | pH | | 3.3 | 3.43 | 3.37 |
| | Maltotriose | %by mass | 0 | 0.7 | 0.7 |
| | Content ratio of maltotriose to acetic acids | - | 0.00 | 0.49 | 0.48 |
| Evaluation of acetic acid-containing | Flavor balance as acetic acid-containing | Evaluation | Ⓞ | Ⓞ | Ⓞ |
| seasoning liquid | seasoning liquid | Remarks | | | |
| Precooked Food | Addition amount of acetic acid-containing seasoning liquid relative to total amount of food ingredient and other raw materials | %by mass | 4 | 4 | 4 |
| | Content of acetic acid relative to total amount of food ingredient and other raw materials | %by mass | 0.058 | 0.058 | 0.058 |
| | Content of total free amino acids relative to total amount of food ingredient and other raw materials | %by mass | 0.0024 | 0.0140 | 0.0124 |
| | Content of nine kinds of free amino acids relative to total amount of food ingredient and other raw materials | %by mass | 0.0024 | 0.0140 | 0.0124 |
| | Content of maltotriose relative to total amount of food ingredient and other raw materials | %by mass | 0.0000 | 0.0280 | 0.0280 |
| Evaluation of Precooked Food | Syneresis immediately after production | - | Comparison | Comparison | Comparison |
| | Syneresis after 6 hours | - | 2 | 4 | 4 |
| | Syneresis after 12 hours | - | 2 | 4 | 5 |
| | Syneresis after 24 hours | - | 1 | 4 | 5 |
| | Syneresis after 48 hours | - | 1 | 5 | 5 |
| | Syneresis immediately after production (with re-heating) | - | Comparison | Comparison | Comparison |
| | Syneresis after 6 hours (with re-heating) | - | 2 | 4 | 4 |
| | Syneresis after 12 hours (with re-heating) | - | 2 | 4 | 4 |
| | Syneresis after 24 hours (with re-heating) | - | 2 | 4 | 5 |
| | Syneresis after 48 hours (with re-heating) | - | 1 | 5 | 5 |
| | Color immediately after production | - | Comparison | Comparison | Comparison |
| | Color after 6 hours | - | 2.6 | 4.1 | 4.5 |
| | Color after 12 hours | - | 2.4 | 4.3 | 4.5 |
| | Color after 24 hours | - | 2.1 | 4.3 | 4.3 |
| | Color after 48 hours | - | 2 | 4.2 | 4.3 |
| | Flavor immediately after production | - | Comparison | Comparison | Comparison |
| | Flavor after 6 hours | - | 3.8 | 4.5 | 4.8 |
| | Flavor after 12 hours | - | 3.2 | 4.4 | 4.6 |
| | Flavor after 24 hours | - | 2.2 | 4.4 | 4.6 |
| | Flavor after 48 hours | - | 2.1 | 4.3 | 4.5 |
| | Acidic taste/acid odor and "choke" immediately after production | - | 2.0 | 4.6 | 4.6 |

**Table 3-2**

| | Cook i ng menu | Unit | Steamed pork and vegetables | | |
|---|---|---|---|---|---|
| | | | Test Sample 34 | Test Sample 35 | Test Sample 36 |
| Seasoning | Sake lees degradant | g | | | 20 |
| Seasoning | Protein hydrolysate | g | | 20 | |
| Seasoning | Yeast extract A | g | | | |
| Seasoning | Yeast t extract B | g | | | |
| Sugars | Maltotriose solution (35% by mass) | g | | 40 | 40 |
| Sug ars | Sugar | g | | 10 | |
| Sal t | Table salt | g | 30 | 30 | 30 |
| Vinegar | Brewed vinegar (acid degree:15.07) | mL | 800 | 800 | 800 |
| Vinegar | Rice vinegar (acid degree:4.90) | mL | | | |
| Vinegar | Black vinegar (acid degree:4.53) | mL | | | |
| Extract | Ke lp extract | mL | 3 | | |
| Extract | Ski pjack tuna extract | mL | 3 | | |
| Seasoning | Powdered soy protein | mL | | | |
| Seasoning liquid | Dark soy sauce | mL | | | 50 |
| | Water | mL | + | + | + |
| Total | | g | 1000 | 1000 | 1000 |
| Acetic acid-containing seasoning liquid | Acetic acid | %by mass | 12.8 | 12.7 | 13.0 |
| | Total free amino acids | %by mass | 0.040 | 0.650 | 0.690 |
| | Nine kinds of free amino acids | %by mass | 0.005 | 0.370 | 0.317 |
| | Content ratio of nine kinds of free amino acids to total free amino acids | - | 0.13 | 0.57 | 0.46 |
| | Content ratio of total free amino acids to acetic acid | - | 0.003 | 0.051 | 0.053 |
| | pH | | 2.58 | 2.72 | 2.85 |
| | Maltotriose | %by mass | 0 | 1.5 | 1.5 |
| | Content ratio of maltotriose to acetic acids | - | 0.00 | 0.12 | 0.12 |
| Evaluation of acetic acid-containing seasoning liquid | Flavor balance as acetic acid-containing | Evaluation | Ⓞ | Ⓞ | Ⓞ |
| | seasoning liquid | Remarks | | | |
| Precooked Food | Addition amount of acetic acid-containing seasoning liquid relative to total amount of food ingredient and other raw materials | %by mass | 0.2 | 0.2 | 0.2 |
| | Content of acetic acid relative to total amount of food ingredient and other raw materials | %by mass | 0.026 | 0.025 | 0.026 |
| | Content of total free amino acids relative to total amount of food ingredient and other raw materials | %by mass | 0.0001 | 0.0013 | 0.0014 |
| | Content of nine kinds of free amino acids relative to total amount of food ingredient and other raw materials | %by mass | 0.0001 | 0.0013 | 0.0014 |
| | Content of maltotriose relative to total amount of food ingredient and other raw materials | %by mass | 0.0000 | 0.0030 | 0.0030 |
| Evaluation of Precooked Food | Syneresis immediately after production | - | Comparison | Comparison | Comparison |
| | Syneresis after 6 hours | - | 2 | 4 | 4 |
| | Syneresis after 12 hours | - | 2 | 4 | 5 |
| | Syneresis after 24 hours | - | 1 | 4 | 5 |
| | Syneresis after 48 hours | - | 1 | 4 | 5 |
| | Syneresis immediately after production (with re-heating) | - | Comparison | Comparison | Comparison |
| | Syneresis after 6 hours (with re-heating) | - | 2 | 4 | 5 |
| | Syneresis after 12 hours (with re-heating) | - | 1 | 4 | 5 |
| | Syneresis after 24 hours (with re-heating) | - | 1 | 4 | 5 |
| | Syneresis after 48 hours (with re-heating) | - | 1 | 5 | 5 |
| | Color immediately after production | - | Comparison | Comparison | Comparison |
| | Color after 6 hours | - | 3 | 4 | 4.6 |
| | Color after 12 hours | - | 2.8 | 4 | 4.4 |
| | Color after 24 hours | - | 2.6 | 4 | 4.3 |
| | Color after 48 hours | - | 2.2 | 3.8 | 4.3 |
| | Flavor immediately after production | - | Comparison | Comparison | Comparison |
| | Flavor after 6 hours | - | 3.3 | 4.7 | 4.6 |
| | Flavor after 12 hours | - | 3.2 | 4.7 | 4.7 |
| | Flavor after 24 hours | - | 2.1 | 4.6 | 4.5 |
| | Flavor after 48 hours | - | 2 | 4.5 | 4.4 |
| | Acidic taste/acid odor and "choke" immediately after production | - | 1.2 | 4.2 | 4.3 |

### CROSS-REFERENCE TO RELATED APPLICATIONS

This application is based on and claims priority to Japanese Patent Application No. 2019-036185 filed on February 28, 2019, the disclosure of which is hereby incorporated by reference in its entirety.

## Claims

1. An acetic acid-containing seasoning liquid comprising:
acetic acid;
at least one free amino acid selected from nine kinds of free amino acid groups consisting of valine, methionine, isoleucine, leucine, tyrosine, phenylalanine, histidine, lysine, and arginine; and
a free amino acid other than the free amino acid groups,
wherein the acetic acid is contained in an amount of 0.1 % by mass or more,
wherein a total content mass ratio of the nine kinds of free amino acid groups to total free amino acids is in a range of 0.20 to 0.70, and
wherein a content mass ratio of the total free amino acids to the acetic acid is in a range of 0.01 to 0.30.

2. The acetic acid-containing seasoning liquid according to claim 1, further comprising maltotriose,
wherein a content mass ratio of the maltotriose to the acetic acid is in a range of 0.01 to 5.0.

3. The acetic acid-containing seasoning liquid according to claim 1 or 2, wherein a total content of the nine kinds of free amino acid groups in the acetic acid-containing seasoning liquid is in a range of 0.02 % to 0.80 % by mass.

4. The acetic acid-containing seasoning liquid according to any one of claims 1 to 3, wherein a pH is in a range of 2.0 to 4.6.

5. The acetic acid-containing seasoning liquid according to any one of claims 1 to 4, wherein a ratio of a total content of three kinds of free amino acids of lysine, arginine, and histidine among the nine kinds of free amino acid groups to a total content of the nine kinds of free amino acid groups is 11 % by mass or more.

6. The acetic acid-containing seasoning liquid according to claim 5, wherein in a content mass ratio of the three kinds of free amino acids, the content mass ratio of the arginine to the lysine is in a range of 0.10 to 3.0 and the content mass ratio of the histidine to the lysine is in a range of 0.05 to 1.0.

7. An ingredient-containing precooked food that contains the acetic acid-containing seasoning liquid according to any one of claims 1 to 6,
wherein the ingredient-containing precooked food contains the acetic acid-containing seasoning liquid such that a content of acetic acid with respect to a total amount of food ingredient and other raw materials or a total amount of cooked and/or processed food is in a range of 0.02 % to 1.0 % by mass, and
wherein the food ingredient is in a raw state, or in a case of making preparations, in a raw state before the preparations or a state of being made the preparations.

8. A method for producing an ingredient-containing precooked food, the method comprising:
in producing the ingredient-containing precooked food,
adding the acetic acid-containing seasoning liquid according to any one of claims 1 to 6 to a food ingredient and other raw materials or to a cooked and/or processed food such that a content of the acetic acid with respect to the food ingredient and the other raw materials or the cooked and/or processed food is in a range of 0.02 % to 1.0 % by mass, wherein the food ingredient is in a raw state, or in a case of making preparations, in a raw state before the preparations or a state of being made the preparations; and
cooking the food as necessary.

9. The method according to claim 8, wherein the ingredient-containing precooked food is a sliced and dried radish, simmered chicken and root vegetables, or a *hijiki* seaweed simmered food.

10. An ingredient-containing precooked food being produced by the method for producing an ingredient-containing precooked food according to claim 8 or 9,
wherein syneresis from the ingredients and/or a change in color of the ingredients is suppressed even after long-term storage.

11. A method for producing an acetic acid-containing seasoning liquid, the method comprising:
in producing the acetic acid-containing seasoning liquid,
mixing acetic acid, at least one free amino acid selected from nine kinds of free amino acid groups consisting of valine, methionine, isoleucine, leucine, tyrosine, phenylalanine, histidine, lysine, and arginine, a free amino acid other than the free amino acid groups, and other seasoning raw materials such that a content of the acetic acid is 0.1 % by mass or more, a total content mass ratio of the nine kinds of free amino acid groups to total free amino acids is in a range of 0.20 to 0.70, and a content mass ratio of the total free amino acids to the acetic acid is in a range of 0.01 to 0.30 to obtain a homogeneous liquid; and
filling the obtained liquid in a container.

12. A method for suppressing syneresis from ingredients and/or a change in color of the ingredients during long-term storage of an ingredient-containing precooked food, the method comprising:
in suppressing syneresis from the ingredients and/or a change in color of the ingredients during long-term storage of the ingredient-containing precooked food,
adding the acetic acid-containing seasoning liquid according to any one of claims 1 to 6 to a food ingredient and other raw materials or to a cooked and/or processed food such that a content of the acetic acid with respect to the food ingredient and the other raw materials or the cooked and/or processed food is in a range of 0.02 % to 1.0 % by mass,
wherein the food ingredient is in a raw state, or in a case of making preparations, in a raw state before the preparations or a state of being made the preparations.
